# FASCICULE DE BREVET EUROPEEN

(11) **EP 2 446 554 B1**
(45) Date de publication et mention de la délivrance du brevet: **03.04.2013**
(21) Numéro de dépôt: 10730742.3
(22) Date de dépôt: 21.06.2010
(51) Int. Cl.: H04B 7/26, H04B 7/02

(54) **PROCEDES D'EMISSION POUR UN RESEAU SANS FIL ET PROCEDE DE RECEPTION CORRESPONDANT**
VERFAHREN ZUM SENDEN IN EINEM DRAHTLOSEN NETZWERK, UND EIN ENTSPRECHENDES VERFAHREN ZUM EMPFANGEN
METHOD FOR TRANSMISSION IN A WIRELESS NETWORK AND A CORRESPONDING METHOD FOR RECEPTION

(30) Priorité: 24.06.2009 FR 0954298
(43) Date de publication de la demande: 02.05.2012
(73) Titulaire: Thomson Licensing, 92130 Issy-les-Moulineaux (FR)
(72) Inventeur: GUILLOUARD, Samuel, F-92130 Issy les Moulineaux (FR); FONTAINE, Patrick, F-92130 Issy les Moulineaux (FR); GUGUEN, Charline, F-92130 Issy les Moulineaux (FR)
(74) Mandataire: Perrot, Sébastien
(86) Numéro de dépôt international: PCT/EP2010/058721
(87) Numéro de publication internationale: WO 2010/149615

(56) Documents cités:
- WO-A1-2009/022303
- WO-A2-2004/015959
- NORTEL NETWORKS: "Transparent Relay for LTE-Advanced FDD", 3GPP DRAFT; R1-082517(NORTEL TRANSPARENT RELAY FOR LTE-A FDD), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080625, 25 juin 2008 (2008-06-25), XP050110782,
- NORTEL: "More Design Aspects on Downlink Transparent Relay in LTE-A", 3GPP DRAFT; R1-083866(NORTEL-DESIGNASPECT TRANSPARENT RELAY)_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 septembre 2008 (2008-09-24), XP050317181,
- NORTEL NETWORKS: "Some Further Considerations for Downlink Transparent Relay for LTE-A", 3GPP DRAFT; R1-083158(NORTEL DL_TRANSPARENT_RELAY), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080813, 13 août 2008 (2008-08-13), XP050316593,

## Description

### 1. Domaine de l'invention.

L'invention se rapporte au domaine des télécommunications et plus précisément à l'émission et à la réception de données sans fil dans un système comprenant plusieurs stations diffusant des données de façon synchrone et à une même fréquence.

### 2. Etat de l'art.

Selon l'état de la technique, un réseau mobile sans fil, par exemple du type GSM (de l'anglais « Global System for Mobile communication » ou en français « Système global pour communication mobile »), WiMAX (basée sur la norme IEEE 802.16) ou LTE (de l'anglais « Long Term Evolution » ou en français « Evolution à long terme », projet du 3GPP (« 3^{rd} Generation Partnership Project »)), présente des cellules contenant chacune une station de base, une cellule étant définie par la zone couverte par l'émission de la station de base. Pour assurer la couverture totale d'une cellule, il est parfois nécessaire d'associer une ou plusieurs stations relais à la station de base d'une cellule pour relayer les signaux émis par la station de base dans des zones non couvertes par la station de base, ces zones constituant les zones d'ombre de la cellule. De telles stations relais ont donc pour rôle de réémettre des signaux émis par la station de base à destination des terminaux mobiles présents par exemple dans les zones d'ombre de la cellule en voie descendante et aussi de réémettre des signaux émis par les terminaux mobiles présents dans les zones d'ombre de la cellule vers la station de base. Les stations de base d'un réseau sont généralement reliées à une « dorsale » (de l'anglais « backbone ») filaire ou sans fil (par exemple par liaison satellite) alors qu'une station relais associée à une station de base n'est pas reliée à la « dorsale » mais uniquement à la ou les stations de base auxquelles elle est associée par une liaison sans fil.

L'utilisation de stations relais dans une cellule couverte posent de nombreux problèmes, par exemple parce que les stations relais utilisent, pour la réémission des signaux, des canaux radio différents de ceux utilisés par les stations de base, notamment afin de minimiser les interférences. La multiplication des canaux radio utilisés par la station de base d'une part et par la station relais d'autre part rend plus difficile la gestion du réseau, notamment lorsque le nombre de terminaux mobiles est important. Par ailleurs, l'utilisation de canaux radio différents oblige un terminal mobile passant d'une zone couverte par la station de base à une zone d'ombre non couverte (ou partiellement couverte) par la station de base mais couverte par la station relais à réaliser une opération de « handover » (ou transfert automatique intercellulaire en français) risquant d'entraîner des interruptions de service au niveau du terminal mobile.

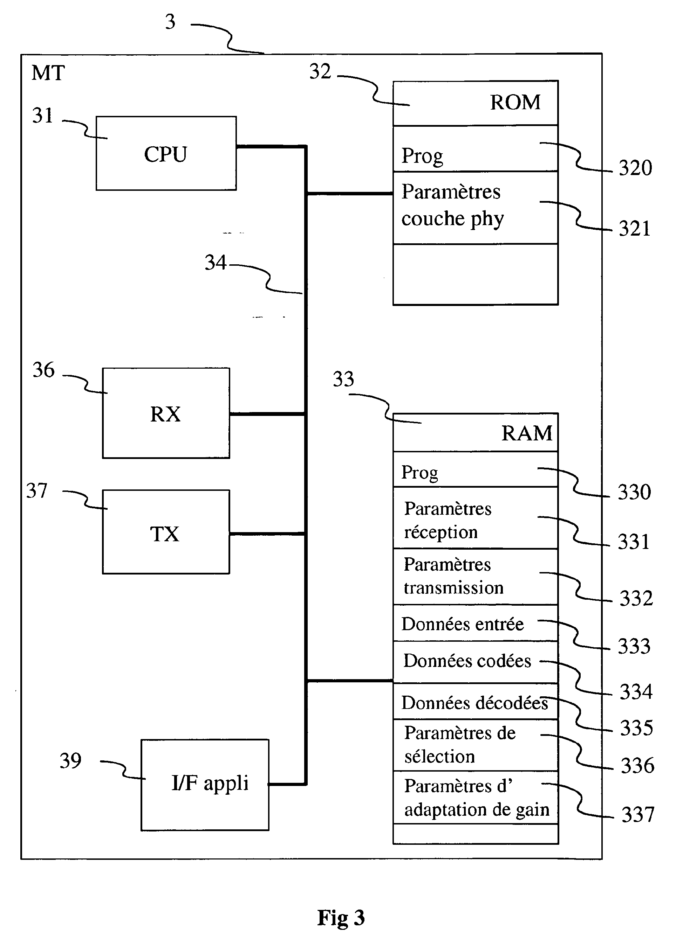

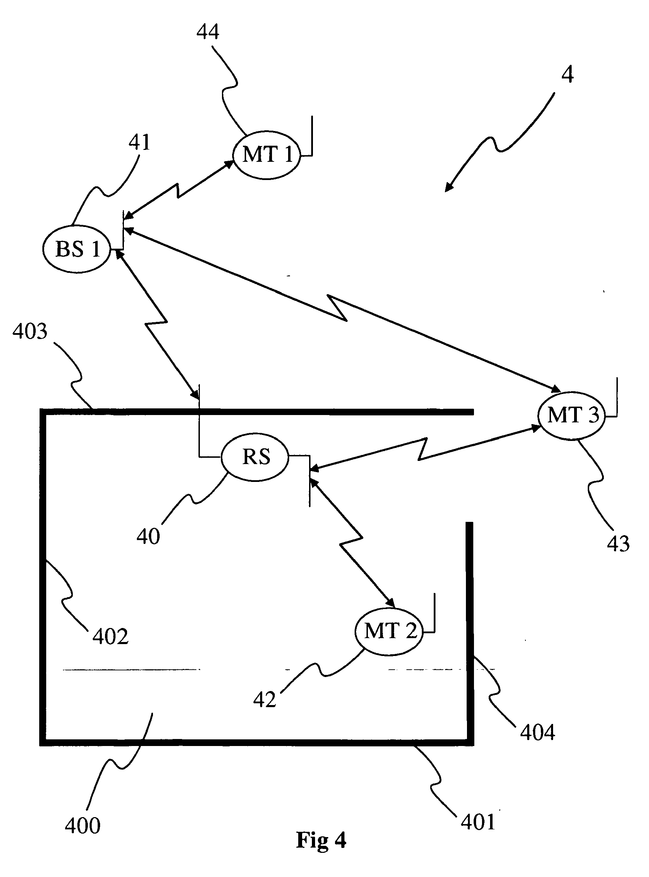

Le document "More Design Aspects on Downlink Transparent Relay in LTE-A", 3GPP DRAFT; R1-083866; 3RD GENERATION PARTNERSHIP PROJECT (3GPP); 2008-09-24; XP050317181 divulgue un procédé d'émission pour un réseau sans fil, ledit réseau comprenant une pluralité de stations (Figures 3 et 4: eNB, NR, UE) émettant à une même fréquence.

### 3. Résumé de l'invention.

L'invention a pour but de pallier ces inconvénients de l'art antérieur.

Plus particulièrement, l'invention a notamment pour objectif d'optimiser l'utilisation des canaux radio dans un réseau sans fil mettant en oeuvre au moins une station relais.

L'invention concerne un procédé d'émission pour un réseau sans fil, le réseau comprenant une pluralité de stations émettant à une même fréquence. Le procédé comprend les étapes suivantes mises en oeuvre par au moins une station relais de la pluralité de stations :
- réception via un premier canal sans fil d'un premier signal représentatif de données ; et
- émission via un deuxième canal sans fil d'un deuxième signal représentatif des données reçues à destination d'un ensemble comprenant au moins un récepteur,
   le deuxième signal étant émis de manière synchronisée avec un troisième signal représentatif des données et destiné à être émis par au moins une station de base de la pluralité de stations.

Selon une caractéristique particulière, ledit premier signal et ledit troisième signal sont émis par au moins une même station de base.

Avantageusement, le procédé comprend une étape de réception d'au moins un signal représentatif d'une information de synchronisation.

Selon une autre caractéristique, le au moins un signal représentatif de l'information de synchronisation est émis par la au moins une station ayant émis le premier signal.

De manière avantageuse, le premier signal est émis sur un premier intervalle temporel, les deuxième et troisième signaux sont émis sur un deuxième intervalle temporel, les premier et deuxième intervalles temporels appartenant à une même trame de communication.

Selon une caractéristique spécifique, le premier signal est émis sur un premier intervalle temporel, les deuxième et troisième signaux sont émis sur un deuxième intervalle temporel, les premier et deuxième intervalles temporels appartenant à deux trames de communication consécutives.

Selon une autre caractéristique, la au moins une station relais reçoit le premier signal via au moins une première antenne et émet le deuxième signal via au moins une deuxième antenne.

Avantageusement, un même quatrième signal est émis par la au moins une station de base et par la au moins une station relais de manière synchronisée.

L'invention concerne également un procédé d'émission pour un réseau sans fil, le réseau comprenant une pluralité de stations émettant à une même fréquence, le procédé comprenant les étapes suivantes mises en oeuvre par au moins une station de base de la pluralité de stations :
- émission via un premier canal sans fil d'un premier signal représentatif de données sur un premier intervalle temporel ; et
- émission via un deuxième canal sans fil d'un troisième signal représentatif des données sur un deuxième intervalle temporel,
   le troisième signal étant émis de manière synchronisée avec un deuxième signal représentatif des données et destiné à être émis par au moins une station relais de la pluralité de stations destinataire du premier signal émis.

L'invention concerne également un procédé de réception pour un réseau sans fil, le réseau comprenant une pluralité de stations émettant à une même fréquence et au moins un terminal mobile, le procédé comprenant les étapes suivantes mises en oeuvre par le au moins un terminal mobile :
- réception via un premier canal sans fil d'un premier signal représentatif de données sur un premier intervalle temporel ; et
- réception d'un signal combiné sur un deuxième intervalle temporel, le signal combiné comprenant un deuxième signal représentatif des données et un troisième signal représentatif des données,
   les deuxième et troisième signaux étant émis de manière synchronisée par respectivement au moins une station de base et au moins une station relais de la pluralité de stations.

Selon une caractéristique particulière, le procédé de réception comprend une étape de sélection des signaux reçus en fonction d'au moins un critère de sélection appartenant au groupe comprenant :
- une puissance de signal reçu ;
- une qualité de liaison entre au moins une station émettrice et le récepteur ;
- un taux d'erreur de signal reçu ;

De manière avantageuse, le procédé comprend une étape d'adaptation du gain en fonction d'un paramètre appartenant au groupe comprenant :
- une position de signal reçu dans une trame de communication ;
- une information représentative de l'émetteur d'un signal.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre un système 1 sans fil mettant en oeuvre plusieurs stations de base, une station relais et un terminal mobile, selon un mode de réalisation particulier de l'invention ;
- les figures 2 et 3 illustrent schématiquement respectivement une station (de base ou relais) et un terminal mobile du système 1 ou 4, selon un mode de réalisation particulier de l'invention ;
- la figure 4 illustre un système 4 sans fil mettant en oeuvre une station de base, une station relais et plusieurs terminaux mobiles, selon un mode de réalisation particulier de l'invention ;
- les figures 5a à 5c illustrent schématiquement la structure d'une trame de communication au niveau de respectivement une station de base, une station relais et un terminal mobile du système 1, selon un premier mode de réalisation particulier de l'invention ;
- les figures 6a à 6c illustrent schématiquement la structure de trames de communication au niveau de respectivement une station de base, une station relais et un terminal mobile du système 1, selon un deuxième mode de réalisation particulier de l'invention ;
- les figures 7a à 7e illustrent schématiquement la structure de trames de communications au niveau de respectivement une station de base, une station relais et chacun des terminaux mobiles du système 4, selon un mode de réalisation particulier de l'invention ;
- la figure 8 illustre un procédé d'émission selon un mode particulier de réalisation de l'invention, mis en oeuvre par une station relais du système 1 ou 4 ;
- la figure 9 illustre un procédé d'émission selon un mode particulier de réalisation de l'invention, mis en oeuvre par une station de base du système 1 ou 4 ; et
- la figure 10 illustre un procédé de réception selon un mode particulier de réalisation de l'invention, mis en oeuvre par un terminal mobile du système 1 ou 4.

### 5. Description détaillée de modes de réalisation de l'invention.

L'invention sera décrite en référence à un mode particulier de réalisation d'un procédé d'émission dans un réseau sans fil comprenant au moins une station de base, au moins une station relais et au moins un terminal mobile, les stations de base et relais émettant à une même fréquence. Un premier signal est émis par au moins une station de base à destination d'au moins une station relais en utilisant un premier canal physique, le premier signal émis étant représentatif de données destinées à au moins un terminal mobile. Une fois le premier signal reçu, la au moins une station relais émet, sur un deuxième canal physique, un deuxième signal représentatif des mêmes données que celles du premier signal. Un troisième signal est émis de manière synchronisée à l'émission du deuxième signal sur le même deuxième canal physique que celui utilisé pour l'émission du deuxième signal, le troisième signal étant également représentatif des mêmes données que le premier signal et le deuxième signal. L'émission des deuxième et troisième signaux sur un même canal physique permet d'optimiser l'utilisation des canaux dans un système mettant en oeuvre une station relais tout en améliorant la réception des données au niveau du au moins terminal mobile, plusieurs émetteurs émettant de manière synchronisée des signaux représentatifs des mêmes données.

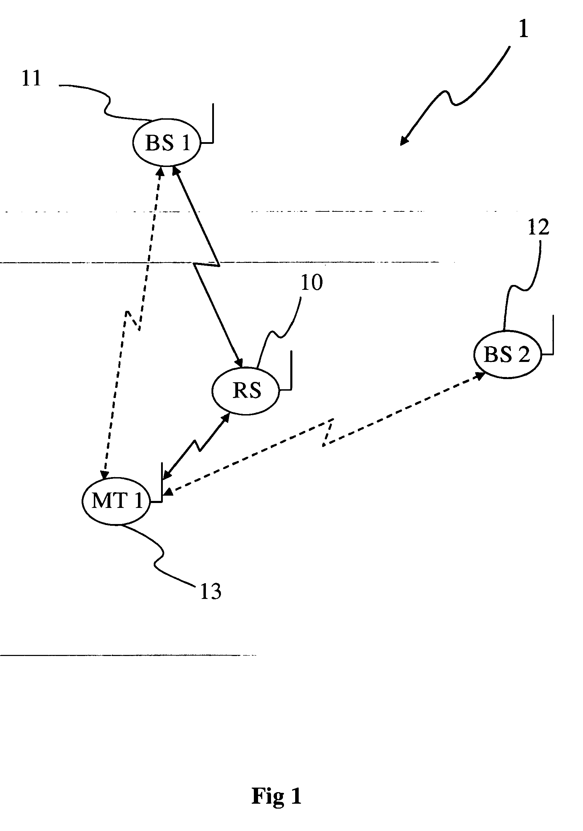

La **figure 1** illustre un système 1 de communication sans fil mettant en oeuvre plusieurs stations de base 11, 12, une station relais 10 et un terminal mobile 13, selon un mode particulier de réalisation de l'invention. L'ensemble des stations du système 1, c'est-à-dire les stations de base 11 et 12 et la station relais 10, émettent à une fréquence unique, c'est-à-dire que les stations opèrent sur une fréquence unique (c'est-à-dire avec un écart en fréquence négligeable au regard du système OFDM considéré, typiquement inférieur à 1 Hz pour un système de type DVB-T (de l'anglais « Digital Video Broadcasting - Terrestrial » ou en français « Diffusion Vidéo Numérique - Terrestre »). L'émission à une fréquence unique par l'ensemble des stations du réseau permet de s'affranchir de tout mécanisme de « handover » au niveau du terminal mobile. La station de base BS1 11 émet un premier signal à destination de la station relais RS 10 en utilisant un premier canal physique. Une fois le premier signal reçu par la station relais 10, la station relais émet à son tour un deuxième signal représentatif des données contenues dans le premier signal à destination du terminal mobile MT1 13 en utilisant un deuxième canal physique. De manière avantageuse, la station de base BS1 11 émet un troisième signal représentatif des mêmes données que celles contenues dans le premier signal à destination du terminal mobile 13, de manière synchronisée avec l'émission du deuxième signal en utilisant également le deuxième canal physique. Les deuxième et troisième signaux sont donc émis sur un même canal physique et de manière synchronisée (c'est-à-dire avec un écart temporel négligeable (par exemple moins d'1 µs) et sans glissement temporel d'un signal émis par une station de base par rapport à un autre signal émis par une autre station de base). De manière générale, un canal physique est caractérisé par une bande de fréquences et un intervalle de temps (de l'anglais « time slot »). Dans le cas particulier d'un accès CDMA (de l'anglais « Code Division Multiple Access » ou « Accès multiple par Répartition par Code»), un canal physique est en outre caractérisé par un code d'étalement. Les liaisons sans fil entre BS1 11 et RS 10 d'une part et entre RS 10 et MT1 13 d'autre part sont illustrées par des flèches bidirectionnelles en trait plein sur la figure 1. La liaison sans fil entre BS1 11 et MT1 13 est quant à elle illustrée par une flèche bidirectionnelle en traits pointillés. Les stations de base BS1 11 et BS2 12 sont avantageusement reliées à une « dorsale » (de l'anglais « backbone ») par une liaison de type filaire ou sans fil (par exemple par une liaison satellite ou radio) non représentée sur la figure 1.

Selon une variante, le troisième signal est émis par la station de base BS2 12, de manière synchronisée avec l'émission du deuxième signal en utilisant le deuxième canal physique, et non pas par la station de base BS1 11. La liaison sans fil entre BS2 12 et MT1 13 est illustrée par une flèche bidirectionnelle en traits pointillés. Le troisième signal est représentatif des données émises par BS1 dans le premier signal, ces données étant transmises à BS2 par exemple par un serveur de la dorsale reliant les stations de base BS1 et BS2 entre elles.

Selon une autre variante, le premier signal est émis de manière synchronisée et à une même fréquence par les stations de base BS1 11 et BS2 12 à destination de RS 10, en utilisant le même premier canal physique. Le troisième signal est alors avantageusement émis de manière synchronisée et à une même fréquence par BS1 11 et BS2 12 en utilisant le deuxième canal physique. Les stations de base BS1 11 et BS2 12 forment ainsi un réseau synchronisé émettant à destination de la station relais 10 et/ou du terminal mobile 13 un même contenu à une même fréquence, c'est-à-dire que les stations de base opèrent sur une fréquence unique (c'est-à-dire avec un écart en fréquence négligeable au regard du système OFDM considéré (typiquement inférieur à 1 Hz pour un système de type DVB-T)) de manière synchrone (c'est-à-dire avec un écart temporel négligeable (par exemple moins d'1 µs) et sans glissement temporel d'un signal émis par une station de base par rapport à un autre signal émis par une autre station de base), la fréquence d'émission étant synchronisée sur les différentes stations de base 11 et 12, par exemple par la réception d'une fréquence de référence donnée par un élément externe (par exemple par satellite GPS (de l'anglais « Global Positioning System » ou « Système de localisation globale » en français) ou par station terrestre de diffusion d'une heure ou fréquence de référence). Les stations de base 11 et 12 sont avantageusement de type SISO (de l'anglais « Single Input Single Output » ou « entrée unique sortie unique » en français) et ne possèdent qu'une seule antenne. Selon une variante, les stations de base 11 et 12 sont de type MIMO et possèdent chacune un codeur MIMO et plusieurs antennes transmettant un signal MIMO. Selon une autre variante, une partie des stations de base 11 et 12 du système 1 sont du type SISO et l'autre partie est du type MIMO. Selon cette variante, les stations de base forment également un réseau synchronisé émettant un même contenu à destination d'une station relais et/ou d'un terminal mobile donné à une même fréquence. Selon un autre exemple de mise en oeuvre, les stations de base 11 et 12 forment un système MIMO coopératif dans lequel les stations de base possèdent indifféremment une ou plusieurs antennes. Un tel système MIMO coopératif utilise des antennes distribuées sur plusieurs stations de base, c'est-à-dire que le signal transmis est réparti spatialement entre plusieurs antennes pouvant appartenir à plusieurs stations de base d'un même sous-ensemble. Le signal complet, avec tous les flux spatiaux, est combiné dans l'air pour être reçu par la station relais 10 et/ou le terminal mobile 13 auquel sont assignées les stations de base du sous-ensemble considéré. Les stations de base d'un tel système MIMO coopératif forment également un réseau synchronisé émettant un même contenu à destination de la station relais et/ou du terminal mobile considéré à une même fréquence. Selon une autre variante, certaines stations de base du système 1 sont du type MIMO, coopératif ou non, et les autres sont du type SISO.

Le terminal mobile 13 est apte à recevoir et décoder les signaux émis par les stations 10 à 12 et les stations 10 à 12 sont aptes à recevoir et décoder les signaux émis par le terminal mobile 13. La station relais 10 est également apte à recevoir et décoder les signaux émis par les stations de base 11 et 12 et les stations de base 11 et 12 sont aptes à recevoir et décoder les signaux émis par la station relais 10.

De manière avantageuse, le terminal mobile 10 du système 1 est un appareil portable, par exemple un téléphone ou terminal portable adapté à recevoir et à traiter des services diffusés (par exemple restitution de voix ou de données audio et/ou affichage de données vidéo, ou plus généralement restitution, stockage ou traitement de données multimédia).

De manière avantageuse, les stations 10 à 12 du système 1 sont des appareils fixes. Les stations 10 à 12 sont des émetteurs de forte puissance adaptés à diffuser des données sur une large zone de couverture ou des émetteurs de moyenne ou faible puissance adaptés à diffuser des données sur une zone de couverture plus restreinte. Selon une variante, l'une au moins des stations 10 à 12, par exemple la station relais 10, forme un système couvrant une « pico-cellule » (de l'anglais « picocell ») c'est-à-dire une petite zone, comme l'intérieur d'un immeuble, d'un supermarché, d'une gare, c'est-à-dire ayant une portée de quelques dizaines de mètres (selon certains modes de réalisation, dans une pico-cellule, la portée est avantageusement inférieure à 300 m). Selon une autre variante, l'une au moins des stations 10 à 12, par exemple la station relais 10, forme un système conçu pour couvrir une « femto-cellule » (de l'anglais « femtocell ») c'est-à-dire une zone restreinte de plus petite taille qu'une pico-cellule, comme quelques pièces d'une maison ou d'un immeuble, un étage d'un immeuble, un avion, c'est-à-dire ayant une portée de quelques mètres (selon certains modes de réalisation, dans une femto-cellule, la portée est avantageusement inférieure à 100 m).

Avantageusement, la station relais 10 est du type SISO et possède une seule antenne. Selon une variante, la station relais 10 est de type MIMO et possède plusieurs antennes.

Avantageusement, le terminal mobile 13 est du type SISO et possède une seule antenne. Selon une variante, le terminal mobile 13 est de type MIMO et possède plusieurs antennes.

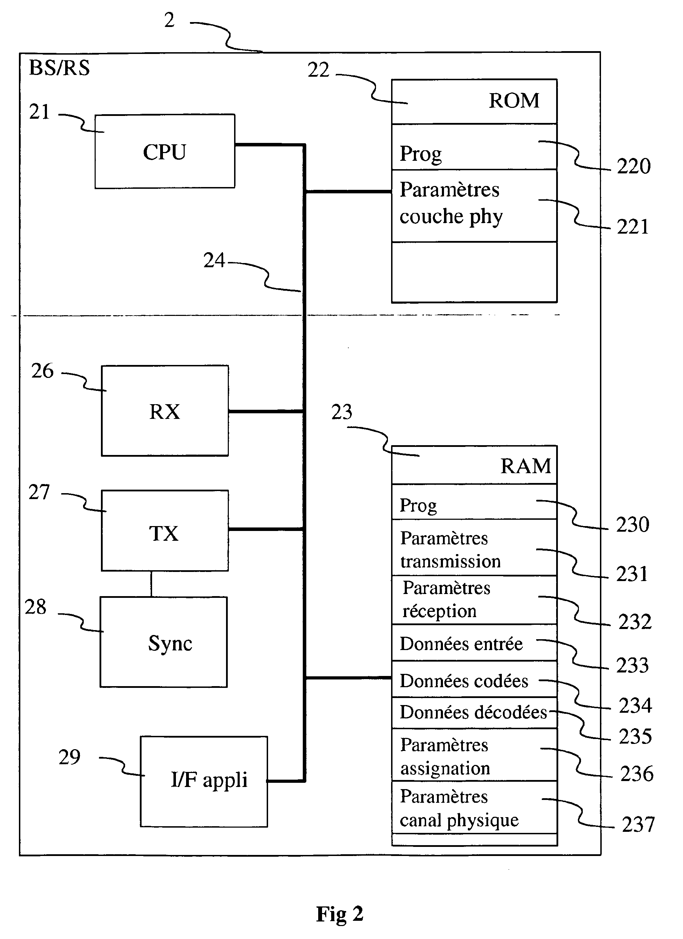

La **figure 2** illustre schématiquement un exemple de réalisation matérielle d'une station 2 correspondant par exemple aux stations de base 11 et 12 et à la station relais 10 de la figure 1.

La station de base 2 comprend les éléments suivants, reliés entre eux par un bus 24 d'adresses et de données qui transporte également un signal d'horloge :
- un microprocesseur 21 (ou CPU) ;
- une mémoire non volatile de type ROM (de l'anglais « Read Only Memory ») 22 ;
- une mémoire vive ou RAM (de l'anglais « Random Access Memory ») 23 ;
- une interface radio 26 ;
- une interface 27 adaptée à la transmission de données (par exemple diffusion de services ou transmission multipoint à point ou point à point) et réalisant notamment les fonctions d'un codeur et/ou de modulateurs OFDM ;
- une interface 28 adaptée à recevoir un signal de synchronisation et à synchroniser l'interface 27 ; et/ou
- une interface MMI (ou interface homme/machine de l'anglais «Man Machine-Inferface») 29 ou une application spécifique adaptée à l'affichage d'informations pour un utilisateur et/ou l'entrée de données ou de paramètres (par exemple le paramétrage des sous-porteuses et des données à transmettre).

On observe que le mot « registre » utilisé dans la description des mémoires 22 et 23 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives de données reçues ou à diffuser).

La mémoire ROM 22 comprend notamment :
- un programme « prog » 220 ; et
- des paramètres 221 de couches physiques.

Les algorithmes mettant en oeuvre les étapes du procédé propres à l'invention et décrits ci-après sont stockés dans la mémoire ROM 22 associée à la station 2 mettant en oeuvre ces étapes. A la mise sous tension, le microprocesseur 21 charge et exécute les instructions de ces algorithmes.

La mémoire vive 23 comprend notamment :
- dans un registre 230, le programme de fonctionnement du microprocesseur 21 chargé à la mise sous tension de la station de base 2 ;
- des paramètres de transmission 231 (par exemple paramètres de modulation, de codage, MIMO, de récurrence des trames) ;
- des paramètres de réception 232 (par exemple paramètres de modulation, de codage, MIMO, de récurrence des trames) ;
- des données entrantes 233 ;
- des données codées 234 pour la transmission de données ;
- des données décodées 235 mises en forme pour être transmises à l'interface vers l'application 29.
- des paramètres d'assignation 236 de la station à un ou plusieurs terminaux mobiles (par exemple le nombre de terminaux mobiles assignés, le nombre maximum de stations de base assignées, la qualité de liaison entre une station de base et le terminal mobile assigné, l'efficacité en débit des stations de base, la localisation d'un terminal mobile) ; et
- des paramètres de canal physique 237 (par exemple allocation d'intervalles temporel déterminés, d'un code déterminé et/ou d'intervalles de sous-porteuses déterminés à l'émission des données par la station 2).

L'interface radio 26 est adaptée à la réception des signaux émis le cas échéant par le terminal mobile 13 du système 1. Dans le cas où la station 2 correspond à une station de base 11, 12, l'interface radio 26 est adaptée à la réception des signaux émis le cas échéant par la station relais 10 du système 1. Dans le cas où la station 2 correspond à la station relais 10 du système 1, l'interface radio 26 est adaptée à la réception des signaux émis le cas échéant par au moins une des stations de base 11 et 12 du système 1.

La figure 3 illustre schématiquement un exemple de réalisation matérielle d'un terminal mobile 3 appartenant au système 1, correspondant par exemple au terminal mobile 13 et adapté à recevoir et décoder les signaux émis par la station 2.

Le terminal mobile 3 comprend les éléments suivants, reliés entre eux par un bus 34 d'adresses et de données qui transporte également un signal d'horloge :
- un microprocesseur 31 (ou CPU) ;
- une mémoire non volatile de type ROM (de l'anglais « Read Only Memory ») 32 ;
- une mémoire vive ou RAM (de l'anglais « Random Access Memory ») 33 ;
- une interface radio 36 ; et
- une interface 37 adaptée à la transmission de données ; et
- une interface 39 MMI adaptée à l'affichage d'informations pour un utilisateur et/ou l'entrée de données ou de paramètres (par exemple le paramétrage des sous-porteuses et des données transmises).

On observe que le mot « registre » utilisé dans la description des mémoires 32 et 33 désigne dans chacune des mémoires mentionnées, aussi bien une zone de mémoire de faible capacité qu'une zone mémoire de grande capacité (permettant de stocker un programme entier ou tout ou partie des données représentatives d'ensembles de données reçus ou décodés).

La mémoire ROM 32 comprend notamment :
- un programme « prog» 320 ; et
- des paramètres 321 de couches physiques.

Les algorithmes mettant en oeuvre les étapes du procédé propre à l'invention et décrits ci-après sont stockés dans la mémoire ROM 32 associée au terminal mobile 3 mettant en oeuvre ces étapes. A la mise sous tension, le microprocesseur 31 charge et exécute les instructions de ces algorithmes.

La mémoire vive 33 comprend notamment :
- dans un registre 330, le programme de fonctionnement du microprocesseur 31 chargé à la mise sous tension du terminal mobile 3 ;
- des paramètres de réception 331 (par exemple paramètres de modulation, de codage, MIMO, de récurrence des trames) ;
- des paramètres de transmission 332 (par exemple paramètres de modulation, de codage, MIMO, de récurrence des trames) ;
- des données entrantes 333 correspondant aux données reçues et décodées par le récepteur 36 ;
- des données codées 334 pour la transmission de données ;
- des données décodées 335 mises en forme pour être transmises à l'interface vers l'application 39 ;
- des paramètres de sélection 236 de signal reçu (par exemple la puissance de signal reçu, la qualité de la liaison entre une station 2 et le terminal mobile 3, un taux d'erreur de signal reçu) ; et
- des paramètres d'adaptation de gain 237 (par exemple une position d'un signal reçu dans une trame de communication, une information représentative de la station 2 émettrice du signal).

L'interface radio 36 est adaptée à la réception des signaux émis par les stations 10 à 12 du système 1.

D'autres structures de la station 2 et/ou du terminal mobile 3 que celles décrites en regard des figures 2 et 3 sont compatibles avec l'invention. En particulier, selon des variantes, des stations et/ou des terminaux mobiles compatibles avec l'invention sont mis en oeuvre selon une réalisation purement matérielle ("hardware" en anglais), par exemple sous forme d'un composant dédié (par exemple dans un ASIC ou FPGA ou VLSI) (respectivement «Application Specific Integrated Circuit» en anglais, signifiant « Circuit Intégré à vocation d'une application spécifique », « Field-Programmable Gate Array » en anglais, signifiant « Réseau de Portes Programmable In-Situ », « Very Large Scale Integration » en anglais, signifiant « Intégration à très grande échelle ») ou de plusieurs composants électroniques intégrés dans un appareil ou encore sous forme d'un mélange d'éléments matériels et d'éléments logiciels (« software » en anglais).

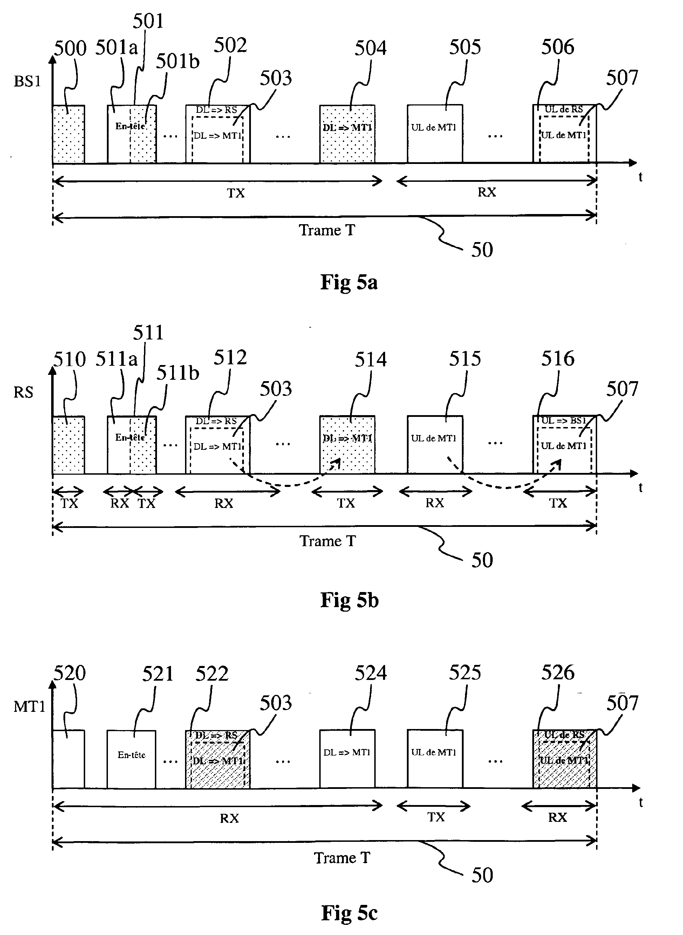

Les figures 5a à 5c illustrent respectivement la structure d'une trame de communication représentative des échanges de salves (de l'anglais « burst ») au niveau de la station de base BS1 11, de la station relais RS 10 et du terminal mobile 13 du système 1 de la figure 1, selon un premier exemple de mise en oeuvre non limitatif particulièrement avantageux de l'invention.

La **figure 5a** illustre une trame de communication T 50 représentant les échanges de salve entre la station de base BS1, la station relais RS et le terminal mobile MT1, vue depuis BS1. La trame 50 comprend une salve 500 correspondant par exemple à un préambule de synchronisation, une salve 501 émise par BS1 correspondant par exemple à un en-tête de trame, une salve 502 émise par BS1 en voie descendante DL (de l'anglais « downlink ») à destination de RS, une salve 504 émise par BS1 en voie descendante DL à destination de MT1, une salve 505 reçue de MT1 en voie montante UL (de l'anglais « uplink ») et une trame 506 reçue de RS en voie montante UL. La salve 501 comprend avantageusement une première partie d'en-tête de trame 501 a et une deuxième partie d'en-tête de trame 501 b. La première partie d'en-tête 501 a comprend une information représentative de la structure de la trame 50, c'est-à-dire par exemple une description de la séquence des intervalles temporels DL et UL composant la trame 50. Une telle description comprend par exemple des informations représentatives des heures de début et de fin de chaque intervalle temporel (de l'anglais « time slot »), de durée de trame, du caractère descendant (DL) ou montant (UL) des intervalles, des sous-porteuses allouées pour la communication de chacune des salves associée à chacun des intervalles dans le cas d'une modulation OFDMA (de l'anglais « Orthogonal Frequency-Division Multiple Access » ou « Access Multiple par Répartition de Fréquence Orthogonale »), du code d'étalement de spectre utilisé dans le cas d'une modulation CDMA (de l'anglais « Code Division Multiple Access » ou « Access multiple par Répartition par Code»), du destinataire de chaque intervalle temporel (ou salve), de l'émetteur de chaque intervalle temporel. La première partie d'en-tête 501a est émise par BS1 sur un canal physique caractérisé par un groupe de paramètres comprenant une liste de sous-porteuses, un intervalle de temps, un niveau d'interférence et, dans le cas d'un accès CDMA, d'un même code d'étalement. La deuxième partie d'en-tête 501 b comprend une information représentative de la séquence des intervalles (ou salves) émis par la station de base BS1 et la station relais RS de manière synchronisée sur un même canal physique, c'est-à-dire les intervalles 504 et 514 selon l'exemple illustré par les figures 5a et 5b. La deuxième partie d'en-tête 501 b est émise de manière synchrone avec la deuxième partie d'en-tête 511 b par BS1 et RS sur un même canal physique. Les deux deuxièmes parties d'en-tête 501 b et 511 b comprennent la même information représentative de la séquence des intervalles émis par BS1 et RS de manière synchrone. Le canal physique utilisé pour l'émission de la première partie d'en-tête 501 a est avantageusement différent du canal physique utilisé par BS1 et RS pour l'émission synchronisée des deuxièmes parties d'en-tête 501 b et 511 b en ce qu'il utilise un intervalle temporel différent, c'est-à-dire que la première partie d'en-tête est émise sur au moins un premier intervalle temporel et la deuxième partie d'en-tête est émise sur au moins un deuxième intervalle temporel différent du premier intervalle temporel. La salve 502 correspond à un premier signal, émis par BS1 à destination de RS, représentatif de données 503, données 503 qui sont destinées à être réémises par RS à destination de MT1 une fois les données 503 reçues et décodées par RS. La salve 502 est émise sur un canal physique, dit premier canal physique. La salve 504 est émise de manière synchronisée avec la salve 514 émise par RS sur un même canal physique, dit deuxième canal physique. La salve 504 correspond à un signal (dit troisième signal), émis par BS1 à destination de MT1, représentatif des données 503 contenues dans le premier signal. La salve 514 correspond à un signal (dit deuxième signal), émis par RS à destination de MT1, représentatif des données 503 contenues dans les premier et troisième signaux. Les deuxième et troisième signaux sont émis de manière synchronisée par respectivement RS et BS1 et sont représentatifs des mêmes données destinées à MT1. Les premier et deuxième canaux physiques sont avantageusement différents en ce qu'ils utilisent des intervalles temporels différents. La salve 505 correspond à un signal, émis par MT1 en voie montante UL à destination de RS, représentatif de données destinées au réseau de stations de base. Cette salve 505 est avantageusement reçue et décodée par BS1. Selon une variante, la salve 505 est reçue par BS1 sans être décodée par BS1. Selon une autre variante, la salve 505 n'est pas reçue par BS1. La salve 506 correspond à un signal, émis par RS à destination de BS1 et reçue par BS1, représentatif de données 507 identiques à celles contenues dans le signal émis par MT1 correspondant à la salve 505, reçue ou non par BS1.

La figure 5b illustre la trame de communication T 50 vue depuis RS. La trame 50 comprend une salve 510 correspondant par exemple au préambule de synchronisation, une salve 511 correspondant par exemple à l'en-tête de trame, une salve 512 reçue par RS, une salve 514 émise par RS à destination de MT1, une salve 515 reçue de MT1 et une salve 516 émise par RS à destination de BS1. La salve 510 est émise de manière synchronisée par RS avec la salve 500 émise par BS1. Les salves 500 et 510 correspondent à des signaux représentatifs d'une même information de synchronisation émis à destination de l'ensemble des terminaux mobiles du réseau. De manière avantageuse, l'information de synchronisation est émise une première fois (dans une première trame) par BS1 à destination de RS avant d'être réémise par BS1 et RS de manière synchronisée dans les trames suivant la première trame. Selon une variante, une information de mise à jour de cette information de synchronisation est émise par exemple par BS1 à destination de RS toutes les X trames, X étant par exemple égal à 5, 10 ou 20. Selon une variante, l'information de synchronisation est donnée à BS1 et RS par un élément externe (par exemple par satellite GPS ou par station terrestre de diffusion d'une heure de référence). L'en-tête de trame 511 comprend une première partie d'en-tête 511a reçue de BS1 et comprenant une information représentative de la séquence des salves (ou intervalles temporels) de la trame 50, cette information étant émise par BS1 dans la salve 501 a. L'en-tête de trame 511 comprend également une deuxième partie d'en-tête 511 b comprenant une information représentative de la séquence des intervalles émis par BS1 et RS de manière synchrone (504 et 514), cette information étant également contenue dans la salve 501 b émise de manière synchronisée par BS1 avec la salve 511 b. La salve 512 est reçue de BS1 et comprend une information représentative de données 503 destinées à MT1. RS décode les données 503 pour les émettre lors d'une salve ultérieure de la trame T 50, à savoir la salve 514. La salve 514 correspond à un signal (dit deuxième signal) émis par RS représentatif des données 503 reçues par RS avec la réception de la salve 512. La salve 514 est émise de manière synchronisée avec la salve 504 émise par BS1, la salve 514 correspondant à un deuxième signal représentatif des données 503 et la salve 504 correspondant à un troisième signal représentatif des mêmes données 503 ou 503. Les deux salves 504 et 514 sont émises sur un même deuxième canal physique. La salve 515 est reçue et correspond à un signal émis par MT1. RS reçoit la 515 et décode les données comprises dans la salve 515 pour les émettre dans une salve ultérieure de la même trame T 50, à savoir la salve 516. Les données ainsi reçues dans la salve 515 sont codées une nouvelle fois pour être insérées dans une salve 516 correspondant à un signal émis par RS et destiné à BS1.

La figure 5c illustre la trame de communication T 50 vue depuis MT1. La trame comprend une salve 520 comprenant une information de synchronisation reçue de BS1 et/ou RS, une salve 521 correspondant par exemple à un en-tête de trame, une salve 522 correspondant à un signal représentatif de données 503, une salve 524 correspondant à un signal représentatif des mêmes données 503, une salve 525 émise par MT1 et une salve 526 comprenant des données 507. La salve 520 correspond à un signal reçu par MT1 correspondant à une combinaison de signaux émis de manière synchronisée par BS1 et RS, à savoir la combinaison d'un signal émis par BS1 correspondant à la salve 500 et d'un signal émis par RS correspondant à la salve 510. Selon une variante, le signal reçu par MT1 correspond à l'un ou l'autre des signaux émis par respectivement BS1 et RS. L'en-tête 521 reçu par MT1 comprend également deux parties, la première étant émise par BS1 et la deuxième étant émise de manière synchronisée par BS1 et RS. De manière avantageuse, MTT1 décode seulement la deuxième partie de l'en-tête 521, seule la deuxième partie étant nécessaire à MT1. En effet, la deuxième partie d'en-tête comprend les informations décrivant les intervalles temporels 524 et 525 concernant MT1. La salve 522 correspond à un signal reçu de BS1 représentatif de données 503, le signal émis par BS1 et contenant les données 503, étant destiné à RS. De manière avantageuse, cette salve 522 n'est pas décodée par MT1 (salve hachurée sur la figure 5c). Selon une variante, la salve 522 n'est pas reçue par MT1, par exemple si BS1 est trop éloignée ou si MT1 se trouve dans une zone non couverte de la zone d'émission de BS1, ou si cette salve est décrite dans la première partie d'en-tête 501a, dans le cas où cette première partie d'en-tête ne serait pas reçue correctement. Selon une autre variante, MT1 reçoit et décode la salve 522 pour en extraire les données 503, par exemple si le signal reçu correspondant à la salve 522 est reçu à un niveau de puissance satisfaisant (par exemple avec un niveau de puissance supérieur à -80 dBm). La salve 524 correspond à un signal reçu par MT1 correspondant à une combinaison de signaux émis de manière synchronisée par BS1 et RS, à savoir la combinaison d'un signal émis par BS1 correspondant à la salve 504 et d'un signal émis par RS correspondant à la salve 514. Le signal reçu 524 est représentatif des données 503. Selon une variante, le signal reçu par MT1 correspond à l'un 504 ou l'autre 514 des signaux émis par respectivement BS1 et RS. MT1 décode alors le signal reçu 524 pour en extraire les données 503 qui lui sont destinées. La salve 525 correspond à un signal émis par MT1 à destination de RS pour que RS réémette les données contenues dans le signal émis par MTT1 à destination de BS1. La salve 526 correspond au signal, reçu ou non par MT1, émis par RS à destination de BS1 et représentatif des données 507 émises par MT1 avec la salve 525. Cette salve 526, en traits hachurés sur la figure 5c, n'est pas utilisée par MT1.

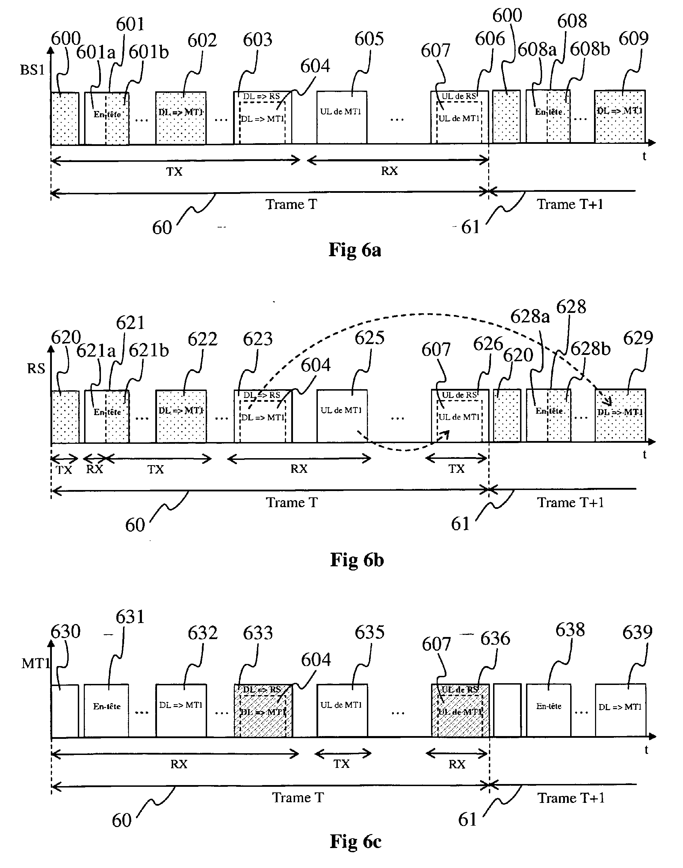

Les figures 6a à 6c illustrent respectivement la structure de trames de communication représentatives des échanges de salves (de l'anglais «burst») au niveau de la station de base BS1 11, de la station relais RS 10 et du terminal mobile 13 du système 1 de la figure 1, selon un deuxième exemple de mise en oeuvre non limitatif particulièrement avantageux de l'invention.

La figure 6a illustre une trame de communication T 60 et une partie d'une trame de communication T+1 61 représentant les échanges de salve entre la station de base BS1, la station relais RS et le terminal mobile MT1, vues depuis BS1. Les salves 600, 601, 605, 607 sont identiques à respectivement les salves 500, 501, 505, 506 décrites pour la figure 5a et ne sont pas décrites à nouveau dans le détail ici. De la même manière, la salve 608 est identique à la salve 601. Les salves apparaissant avec un arrière-plan composé de points correspondent aux salves émises de manière synchronisée par BS1 et RS. La salve 602 est émise par BS1 de manière synchronisée avec la salve 622 émise par RS. Ces deux salves correspondent à deux signaux, émis respectivement par BS1 et RS en utilisant un même canal physique, représentatifs de mêmes données destinées à MT1. La salve 603 correspond à un signal, émis par BS1 et destiné à RS, représentatif de données 604 destinées à être émises à nouveau par RS dans une salve ultérieure et par BS1 dans la trame T+1 61 pendant la salve 609. De la même manière, les données émises pendant la salve 602 ont été émises par BS1 au cours de la trame T-1 (non représentée) dans une salve destinée à RS.

La figure 6b illustre une trame de communication T 60 et une partie d'une trame de communication T+1 61 vues depuis RS. Les salves 620, 621, 625, 627 sont identiques à respectivement les salves 510, 511, 515, 516 décrites pour la figure 5b et ne sont pas décrites à nouveau dans le détail ici. De la même manière, la salve 628 est identique à la salve 621. Les salves apparaissant avec un arrière-plan composé de points correspondent aux salves émises de manière synchronisée par BS1 et RS. La salve 622 est émise par RS de manière synchronisée avec la salve 602 émise par BS1. La salve 623 correspond à un signal reçu de BS1 représentatif de données 624 destinées à MT1. RS décode ainsi les données 624 pour les coder à nouveau, par exemple avec un nouveau code, pour les émettre avec la salve 629 de la trame T+1 61. La salve 609 est émise par BS1 de manière synchronisée avec la salve 629 émise par RS. Ces deux salves correspondent à respectivement deux signaux, émis respectivement par BS1 et RS en utilisant un même canal physique, représentatifs de mêmes données 604 destinées à MT1.

La **figure 6c** illustre une trame de communication T 60 et une partie d'une trame de communication T+1 61 vues depuis MT1. Les salves 630, 631, 635 et 636 sont identiques à respectivement les salves 520, 621, 525, 526 décrites pour la figure 5c et ne sont pas décrites à nouveau dans le détail ici. De la même manière, la salve 638 est identique à la salve 631. Les salves apparaissant avec un arrière-plan hachuré correspondent aux salves non utilisées par MT1 de manière avantageuse. La salve 632 correspond à un signal reçu par MT1 correspondant à une combinaison de signaux émis de manière synchronisée par BS1 et RS, à savoir la combinaison d'un signal émis par BS1 correspondant à la salve 602 et d'un signal émis par RS correspondant à la salve 622. Selon une variante, le signal reçu par MT1 correspond à l'un 602 ou l'autre 612 des signaux émis par respectivement BS1 et RS. MT1 décode alors le signal reçu 632 pour en extraire les données qui lui sont destinées. La salve 633 correspond à un signal reçu de BS1 représentatif de données 604, le signal émis par BS1 et contenant les données 503 étant destiné à RS. De manière avantageuse, cette salve 633 n'est pas décodée par MT1. Selon une variante, la salve 633 n'est pas reçue par MT1, par exemple si BS1 est trop éloignée ou si MT1 se trouve dans une zone non couverte de la zone d'émission de BS1. Selon une autre variante, MT1 reçoit et décode la salve 633 pour en extraire les données 604, par exemple si le signal reçu correspondant à la salve 633 est reçu à un niveau de puissance satisfaisant. La salve 639 de la trame T+1 61 correspond à un signal reçu par MT1 correspondant à une combinaison de signaux émis de manière synchronisée par BS1 et RS, à savoir la combinaison d'un signal émis par BS1 correspondant à la salve 609 et d'un signal émis par RS correspondant à la salve 619. Selon une variante, le signal reçu par MT1 correspond à l'un 609 ou l'autre 619 des signaux émis par respectivement BS1 et RS. MT1 décode alors de manière avantageuse le signal reçu 639 pour en extraire les données 604 qui lui sont destinées. Dans le cas où MT1 a décodé le signal 633 représentatif des données 604 émis par BS1, MT1 ne décode alors avantageusement pas le signal 639, les données 604 ayant été déjà reçues et décodées. Selon une variante, et même si les données 604 ont déjà été reçues et décodées par décodage du signal 633, MT1 décode le signal 639 pour en extraire les données, pour vérifier par comparaison avec les données 604 reçues avec la salve 633 ne contiennent pas d'erreur. Dans le cas où MT1 a décodé le signal 633 pour en extraire les données 604 et que les données ont été décodées avec des erreurs où partiellement, MT1 décode alors le signal 639 pour en extraire les données 604 et corriger ou compléter le jeu de données 604 déjà reçu.

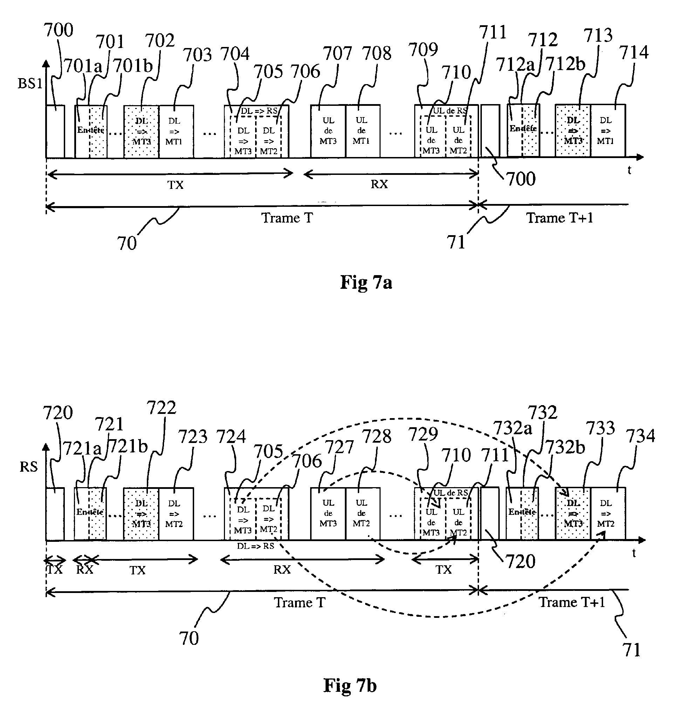

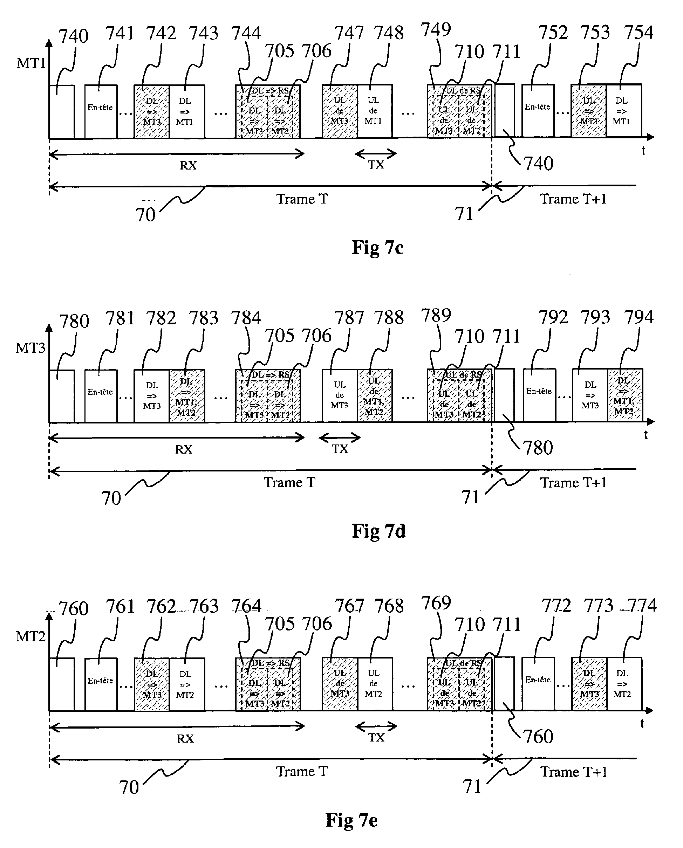

La **figure 4** illustre un système 4 de communication sans fil mettant en oeuvre une station de base BS1 41, une station relais RS 40 et plusieurs terminaux mobiles 42, 43 et 44, selon un mode particulier de réalisation de l'invention. L'ensemble des stations du système 4, c'est-à-dire BS1 41 et RS 40 émettent à une fréquence unique, c'est-à-dire que les stations opèrent sur une fréquence unique (c'est-à-dire avec un écart en fréquence négligeable au regard du système OFDM considéré, typiquement inférieur à 1 Hz pour un système de type DVB-T (de l'anglais « Digital Video Broadcasting - Terrestrial » ou en français « Diffusion Vidéo Numérique - Terrestre»). La station relais RS 40 est située dans un espace intérieur 400 entouré de parois 401 à 404, la paroi 404 étant ajourée en partie. L'espace 400 correspond par exemple à l'intérieur d'un immeuble ou d'une maison ou à l'intérieur d'une pièce d'un immeuble ou d'une maison. La station de base BS1 41 est située à l'extérieur de l'espace 400. Le terminal mobile MT1 44 est situé à proximité de BS1 à l'extérieur de l'espace 400. Le terminal mobile MT2 42 est situé à l'intérieur de l'espace 400. Le terminal mobile MT3 43 est situé à l'extérieur de l'espace 400, à proximité de l'ouverture de la paroi 404 et en ligne de vue (de l'anglais « line of sight ») directe de BS1. BS1 et RS sont séparées par la paroi 403 qui ne laisse pas passer les signaux émis par l'une ou l'autre des stations destinées à l'autre station, ou qui tout du moins atténue très fortement les signaux émis. La station relais RS 40 comprend de manière avantageuse deux antennes, une pour l'échange de signaux avec BS1 et l'autre pour l'échange de signaux avec les terminaux situés à l'intérieur de l'espace 400 (MT2 42) ou en ligne de vue directe, par exemple MT3 43. De son côté, BS1 communique avec MT1 44 et MT3 43 d'une part et avec RS 40 d'autre part mais ne communique pas directement avec MT2 42 qui est situé à l'intérieur de l'espace 400, donc séparé de BS1 41 par au moins une paroi 403. MT 1 44 est assigné à BS1 uniquement pour l'échange de signaux et MT2 42 est assigné à RS 40 uniquement pour l'échange de signaux. Les signaux émis par BS1 n'interfèrent pas avec les signaux émis par RS via son antenne intérieure, c'est-à-dire l'antenne allouée à l'échange de signaux avec les terminaux localisés dans l'espace 400. Les communications entre BS1 et MT1 d'une part et les communications entre RS et MT2 d'autre part peuvent donc avoir lieu simultanément sans risque d'interférence. De plus, et notamment du fait des parois entourant l'espace 400, il n'y a pas (ou très peu) d'interférence entre les signaux émis de BS1 vers MT1 d'une part et les signaux émis de RS vers MT2 d'autre part. Comme cela sera détaillé au regard des figures 7a à 7e, BS1 et RS peuvent avantageusement utiliser un même canal physique pour communiquer respectivement avec MT1 et MT2, c'est-à-dire en utilisant une même fréquence et un même intervalle temporel notamment. Le nombre de canaux physiques utilisés s'en trouve ainsi réduit et donc optimisé. Lorsque BS1 veut émettre des données à destination de MT2, BS1 émet un signal représentatif des données destinées à MT2 à destination de RS sur un canal physique donné. Pour la réception de ce signal, RS sélectionne l'antenne dédiée aux communications issues de l'extérieur de l'espace 400. Une fois le signal reçu décodé par RS 40, RS 40 commute sur son antenne allouée aux communications avec les terminaux à l'intérieur de l'espace 400 (ou en ligne de vue directe de RS) et émet un signal représentatif des données destinées à MT2 42 à destination de MT2 en utilisant un autre canal physique que celui utilisé par BS1 pour transmettre les données à RS. Les canaux physiques utilisés sont différents en ce qu'ils utilisent des intervalles temporels différents. Pour ce qui est des communications avec MT3, le processus est équivalent à celui décrit au regard de la figure 1. Pour transmettre des données à MT3, BS1 émet avantageusement un premier signal représentatif des données à transmettre à destination de RS 40 en utilisant un premier canal physique. Le signal ainsi émis par BS1 est reçu par RS sur son antenne alloué aux communications avec les stations situées à l'extérieur de l'espace 400. Une fois le premier signal reçu et décodé par RS, RS commute sur sa deuxième antenne pour émettre un deuxième signal représentatif des données reçues de BS1 à destination de MT3 en utilisant un deuxième canal physique différent du premier canal physique. RS et BS1 émettant des données à une même fréquence, le deuxième canal physique est différent du premier canal physique en ce qu'il utilise un intervalle temporel différent de celui utilisé par le premier canal physique. BS1 émet également un troisième signal représentatif des mêmes données destinées à MT3 en utilisant le même deuxième canal physique, c'est-à-dire de manière synchronisée avec l'émission du deuxième signal. Le signal alors reçu par MT3 est un signal combiné correspondant à la combinaison du deuxième et du troisième signal. Selon une variante, le deuxième signal est émis avec un code d'étalement différent de celui utilisé pour l'émission du troisième signal (utilisation d'un accès CDMA (de l'anglais « Code Division Multiple Access » ou « Accès multiple par Répartition par Code»)). Selon cette variante, les deuxième et troisième signaux n'utilisent alors plus le même deuxième canal physique, les deuxième et troisième signaux étant cependant toujours émis à la même fréquence et de manière synchronisée.

En voie montante UL (de l'anglais « uplink »), c'est-à-dire d'un terminal mobile MT1, MT2, MT3 vers une station RS, BS1, MT3 43 communique directement avec BS1 41, MT2 42 communique avec BS1 41 par l'intermédiaire de RS 40, MT3 43 communique avec BS1 41 de manière directe ou par l'intermédiaire de RS 40. Dans le cas de MT2 par exemple, MT2 émet un signal à destination de RS sur un canal physique donné, le signal étant représentatif de données destinées à BS1. Ce signal est reçu par RS sur son antenne « interne », c'est-à-dire l'antenne allouée notamment aux communications avec les terminaux mobiles situés dans l'espace 400. Une fois le signal décodé, RS émet un signal à destination de BS1 sur un autre canal physique que celui utilisé pour la communication entre MT2 et RS, le signal étant représentatif des données destinées à BS1 et reçues de MT2 par RS. Ce dernier signal est émis par RS en utilisant son antenne « extérieure », c'est-à-dire l'antenne allouée notamment aux communications avec BS1 située à l'extérieur de l'espace 400.

Selon une variante, BS1 est associée à au moins une autre station de base pour former un premier ensemble de stations de base. Ce premier ensemble de stations de base est par exemple alloué pour la communication avec MT1. Les stations de base de ce premier ensemble émettent alors des données destinées à MT1 en utilisant avantageusement un même canal physique, les données étant émise par chaque station de base de l'ensemble de manière synchronisée. Ce même premier ensemble ou un deuxième ensemble formé par exemple d'une partie des stations de base du premier ensemble est alloué pour la transmission de données à MT2 et/ou MT3. Chaque station de base du deuxième ensemble émet un signal, à destination de RS, représentatif de mêmes données destinées à MT2. Chaque station de base émet de manière synchronisée à la même fréquence et le signal reçu par RS correspond à la combinaison des signaux émis par les stations de base du deuxième ensemble. De la même manière, une pluralité de stations relais peut être utilisée pour former un ensemble de stations relais en communication avec le ou les ensembles de stations de base d'une part et les terminaux mobiles d'autre part. L'utilisation de plusieurs stations de base au lieu d'une seule et/ou l'utilisation de plusieurs stations relais au lieu d'une seule permet de mettre en oeuvre des stations de moindre puissance tout en conservant une bonne qualité de liaison entre émetteur et récepteur, les mêmes données étant émises de manière synchronisée par plusieurs stations.

Les figures 7a à 7e illustrent respectivement la structure de trames de communication représentatives des échanges de salves (de l'anglais « burst ») au niveau de la station de base BS1 41, de la station relais RS 40 et de chaque terminal mobile MT1 44, MT2, 42 et MT3 43 du système 4 de la figure 4, selon un exemple de mise en oeuvre non limitatif particulièrement avantageux de l'invention.

La **figure 7a** illustre une trame de communication T 70 et une partie d'une trame de communication T+1 71 représentant les échanges de salve entre la station de base BS1, la station relais RS et les terminaux mobiles MT1 à MT3, vues depuis BS1. La trame T 70 comprend une première salve 700 correspondant par exemple à un préambule de synchronisation et une salve 701 correspondant par exemple à un en-tête de trame comprenant deux parties d'en-tête 701 a et 701 b. La trame T+1 comprend des salves similaires, respectivement 700 et 712. Ces salves ont été décrites plus en détail en regard des figures 5a à 5c et sont à rapprocher respectivement aux salves 500 et 501. Elles ne seront pas reprises en détail ici. La trame T comprend également une salve 702 destinée à MT3, une salve 703 destinée à MT1, une salve 704 destinée à RS, une salve 708 reçue de MT3, une salve 708 reçue de MT1 et une salve 709 reçue de RS. La salve 703 correspond à un signal émis par BS1 représentatif de données destinées à MT3. Cette salve est émise de manière synchronisée avec la salve 722 émise par RS, la salve 722 correspondant à un signal représentatif des mêmes données que celle contenues dans la salve 702. Les données comprises dans les salves 702, 722 ont été émises une première fois par BS1 dans une trame T-1 antérieure à la trame T dans une salve à destination de RS. La salve 703 correspond à un signal émis par BS1 à destination de MT1 et représentatif de données destinées à MT1. La salve 704 émise par BS1 correspond à un signal destiné à RS, ce signal étant représentatif de données destinées à MT3 d'une part et de données destinées à MT2 d'autre part. Les données destinées à MT3 comprises dans cette salve 704 seront émises à nouveau pour BS dans la salve 713 de la trame T+1 71. La salve 707 correspond à un signal émis par MT3 représentatif de données 710 destinées à BS1. Cette salve 707 est reçue ou non par BS1 en fonction par exemple de la puissance du signal reçu et/ou de la qualité de la liaison entre MT3 et BS1. Si la salve 707 est effectivement reçue par BS1, BS1 décode ou non le signal en fonction de la puissance du signal reçu, de la qualité de la liaison entre MT3 et BS1 et/ou du taux d'erreur du signal reçu. La salve 708 correspond à un signal émis par MT1 représentatif de données destinées à BS1. Cette salve 708 est reçue puis décodée par BS1. La salve 709 correspond à un signal émis par RS représentatif de données 710 émises par MT3 et destinées à BS1 et représentatif de données 711 émises par MT2 et destinées à BS1. Cette salve 709 est décodée par BS1 pour en extraire les données 710 et/ou 711. Selon une variante, si BS1 a déjà décodée en totalité et sans erreur les données 710 lors de la réception de la salve 707, BS1 décide de ne décoder le signal 709 qu'en partie pour en extraire seulement les données 711 en provenance de MT2.

La **figure 7b** illustre une trame de communication T 70 et une partie d'une trame de communication T+1 71 représentant les échanges de salve entre la station de base BS1, la station relais RS et les terminaux mobiles MT1 à MT3, vues depuis RS. La trame T 70 comprend une première salve 720 correspondant par exemple à un préambule de synchronisation et une salve 721 correspondant par exemple à un en-tête de trame comprenant deux parties d'en-tête 721 a et 721 b. La trame T+1 comprend des salves similaires, respectivement 720 et 732. Ces salves ont été décrites plus en détail en regard des figures 5a à 5c et sont à rapprocher respectivement des salves 510 et 511. Elles ne seront pas reprises en détail ici. La salve 722 correspond à un signal émis par RS de manière synchronisée au signal 702 émis par BS11, les deux signaux étant émis en utilisant un même canal physique, étant destinés à MT3 et représentatifs de données destinées à MT3. La salve 723 correspond à un signal émis par MT2 représentatif de données destinées à MT2 et émises par BS1 dans une salve d'une trame T-1 précédent la trame T et non représentée sur la figure 7b. La salve 723 est émise par RS sur le même intervalle temporel que la salve 703 émise par BS1 à destination de MT1. En effet, et tel que décrit à la figure 4, les émissions de BS1 vers les terminaux mobiles situés à l'extérieur de l'espace 400 n'interfèrent pas avec les émissions de RS à destination des terminaux mobiles situés à l'intérieur de l'espace 400, du fait des parois 401 à 404 qui entoure l'espace 400. De ce fait, l'intervalle temporel utilisé par BS1 pour émettre un signal vers MT1 peut être réutilisé par RS pour émettre un signal vers MT2, le canal physique utilisé par BS1 et RS étant alors avantageusement le même. Selon une variante, les canaux physiques utilisés par BS1 et RS pour émettre respectivement vers MT1 et MT2 pendant le même intervalle temporel sont différents en ce qu'ils utilisent des codes d'étalement différents dans le cas d'un accès CDMA. La salve 724 reçue de BS1 correspond à un premier signal émis par BS1 représentatif de données 705 destinées à MT3 et de données 706 destinées à MT2. Une fois les données décodées par RS, RS émet à son tour ces données 705 et 705 lors de deux salves, respectivement 733 à destination de MT3 et 734 à destination de MT2, de la trame T+1 71 suivant la trame T 70. La salve 733 correspond ainsi à un deuxième signal émis par RS à destination de MT3 et représentatifs des données 705 reçues par RS dans la salve 724 et destinées à MT3. Cette salve 733 est émise de manière synchronisée avec la salve 713 qui correspond à un troisième signal émis par BS1 et représentatif des mêmes données 705 destinées à MT3. Le signal 724 est avantageusement reçu par RS sur un premier canal physique et les signaux 713 et 733 sont avantageusement émis par respectivement BS1 et RS sur un deuxième canal physique. Le premier canal physique est différent du deuxième canal physique en ce qu'il utilise un intervalle temporel différent de celui utilisé par le deuxième canal. La salve 734 correspond à un signal émis par RS à destination de MT2 et représentatif des données 706 reçues. La salve 734 utilise le même intervalle temporel que la salve 714 émise par BS1 à destination de MT1, aucune interférence n'apparaissant entre ces salves, BS1 et RS étant séparées par une paroi 403. L'utilisation d'un même intervalle temporel pour l'émission simultanée de deux signaux par deux stations différentes vers deux terminaux mobiles différent permet d'optimiser l'utilisation de la bande passante. Enfin, les salves 727 et 728 correspondent respectivement à un signal émis par MT3 à destination de RS et à un signal émis par MT2 à destination de RS. Le signal émis par MT3 est représentatif de données 710 destinées à BS1 et le signal émis par MT2 est représentatif de données 711 destinées à BS1. Une fois ces données décodées par RS, ces données 710 et 711 sont réémises par RS dans une salve 729 correspondant à un signal destiné à BS1.

Les figures 7c à 7e illustrent une trame de communication T 70 et une partie d'une trame de communication T+1 71 vues respectivement depuis MT1, MT3 et MT2. Les salves apparaissant avec un arrière-plan hachuré correspondent aux salves non décodées par respectivement MT1, MT3 et MT2 de manière avantageuse. Les salves 740, 780 et 760 correspondant à des préambules de synchronisation ne sont pas détaillées ici, de même que les en-têtes 741, 752, 781, 792, 761 et 772. La salve 742, reçue ou non par MT1 et destinée à MT3, n'est pas décodée par MT1, de même que les salves 744 destinée à RS, 747 destinée à RS, 749 destinée à BS1 et 753 destinée à MT3. Seules les salves 743 qui lui sont destinées sont décodées par MT1. La salve 748 est émise par MT1 et est destinée directement à BS1.

La salve 782 correspond à un signal destiné à MT3 et représentatif de données destinées à MT3. Ce signal reçu correspond à la combinaison des signaux 702 et 722 émis respectivement par BS1 et RS. La salve 783, reçue ou non par MT3, et destinée à MT1 et/ou MT2 n'est pas décodée par MT3, de même que les salves 784 destinée à RS, 788 destinée à BS1 et/ou RS, 789 destinée à BS1 et 794 destinée à MT1 et/ou MT2. La salve 787 est émise par MT3 et est destinée à RS et BS1. La salve 793, correspondant à un signal émis par RS et BS1 et représentatif des données 705, est reçue et décodée par MT3. Selon une variante, la salve 784 est décodée au moins en partie pour en extraire les données 705 destinées à MT3, par exemple si le niveau de puissance du signal reçu est supérieur à une valeur seuil et/ou s'il est reçu sans erreur. Selon cette variante et si les données 705 ont bien été décodées, la salve 793 n'est pas utilisée par MT3, les données qu'elle contient ayant déjà été reçues et décodées.

La salve 763 correspond à un signal reçu de RS et destiné à MT2 et représentatif de données destinées à MT2. La salve 762, reçue ou non par MT2, et destinée à MT3 n'est pas décodée par MT2, de même que les salves 764 destinée à RS, 767 destinée à RS/BS1, 769 destinée à BS1 et 773 destinée à MT3. La salve 768 est émise par MT2 et est destinée à RS. La salve 774, correspondant à un signal émis par RS et représentatif des données 706, est reçue et décodée par MT2. Selon une variante, la salve 764 est décodée au moins en partie pour en extraire les données 706 destinées à MT2, par exemple si le niveau de puissance du signal reçu est supérieur à une valeur seuil et/ou s'il est reçu sans erreur. Selon cette variante et si les données 706 ont bien été décodées (par exemple totalement et sans erreur), la salve 774 n'est pas utilisée par MT2, les données qu'elle contient ayant déjà été reçues et décodées.

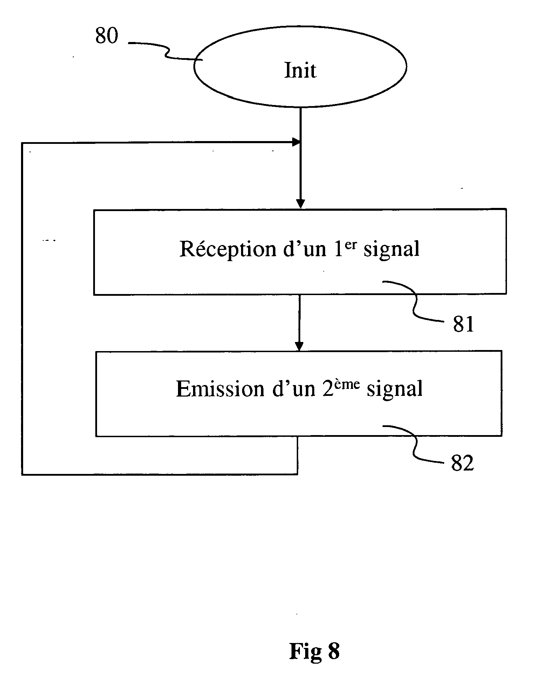

La figure 8 illustre un procédé d'émission mis en oeuvre dans au moins une station relais du système 1 ou 4, selon un exemple de mise en oeuvre non limitatif particulièrement avantageux de l'invention.

Au cours d'une étape d'initialisation 80, les différents paramètres de la au moins une station relais sont mis à jour. En particulier, les paramètres correspondant aux signaux à émettre ou à recevoir et aux sous-porteuses correspondantes sont initialisés d'une manière quelconque (par exemple suite à la réception de messages d'initialisation émis par une des stations de base, dite station maître ou par un serveur non représenté du système 1, ou encore par des commandes d'un opérateur).

Ensuite, au cours d'une étape 81, un premier signal est reçu via un premier canal sans fil par la station relais RS 10, 40. Le premier signal est émis par une station de base BS1 11, 41 et ce premier signal est représentatif de données destinées à au moins un terminal mobile MT1 13 pour le système 1, MT2 42 et/ou MT3 43 pour le système 4. Selon une variante, le premier signal reçu correspond à une combinaison de signaux émis par chaque station de base BS1 11, BS2 12 d'un ensemble de stations de base BS1 et BS2. Les signaux émis par l'ensemble de stations de base sont chacun représentatifs des mêmes données selon cette variante et sont émis de manière synchronisée et à une même fréquence. Selon une variante, le premier signal est émis par un terminal mobile MT1 pour le système 1, MT2 ou MT3 pour le système 4 et le signal est représentatif de données destinées à une ou plusieurs stations de base BS1, BS2.

Puis au cours d'une étape 82, la station relais RS 10, 40 émet un deuxième signal via un deuxième canal sans fil. Ce deuxième signal est représentatif des données reçues avec la réception du premier signal, à savoir des données destinées à au moins un récepteur, c'est-à-dire à au moins un terminal mobile ou, selon une variante, à au moins une station de base. Le deuxième signal est émis de manière synchronisée par RS avec un troisième signal représentatif des mêmes données que celles du deuxième signal, le troisième signal étant destiné à être émis par au moins une station de base BS1, BS2. Selon une variante avantageuse, Le troisième signal est émis par la au moins une station de base BS1 ayant émis le premier signal. L'émission synchronisée de deux signaux représentatifs des mêmes données par au moins une station de base et au moins une station relais présente l'avantage que le signal reçu, correspondant à la combinaison dans l'air des deux signaux émis, sera reçu avec plus de puissance que s'il était émis pas une seule station. Les stations (relais et de base) émettant à une même fréquence, l'émission synchronisée des signaux par deux stations différentes permet d'optimiser l'utilisation des canaux en utilisant un seul canal pour l'émission des deuxième et troisième signaux. Le premier signal est décodé par la station relais RS pour en extraire les données. Les données ainsi décodées sont alors codées de nouveau par RS pour être émise par RS. Le code utilisé pour le codage des données dans le premier signal et pour le codage des mêmes données dans le deuxième signal est avantageusement le même. Selon une variante, les codages utilisés pour le premier signal et pour le deuxième signal sont différents, par exemple par l'utilisation de codes d'étalement différents dans le cas d'un accès CDMA.

Au cours d'une étape non représentée sur la figure 8, la station relais RS reçoit au moins un signal représentatif d'une information de synchronisation. Cette information de synchronisation est avantageusement émise par la au moins une station de base ayant émis le premier signal. Selon une variante, l'information de synchronisation est émise par un élément externe au réseau (par exemple par satellite GPS (de l'anglais « Global Positioning System » ou « Système de localisation globale » en français) ou par station terrestre de diffusion d'une heure de référence). Dans ce cas, cette synchronisation se fait extérieurement à la trame radio. Selon une variante, l'information de synchronisation est stockée en dur dans une mémoire de la station relais. De manière avantageuse, cette synchronisation est maintenue via un oscillateur à Quartz très stable, de type OCXO (Ovennized crystal Oscillator), et/ou par un ajustement sur les signaux d'en-tête en provenance des BS.

De manière avantageuse, le premier signal est émis sur un premier intervalle temporel et les deuxième et troisième signaux sont émis sur un deuxième intervalle temporel différent du premier intervalle temporel. Les premier et deuxième intervalles temporels appartiennent avantageusement à deux trames consécutives temporellement, par exemple le premier intervalle appartient à une trame T et le deuxième intervalle appartient à une trame T+1. Selon une variante, les premier et deuxième intervalles temporels appartiennent à une même trame temporelle T.

Avantageusement, la station relais possède plusieurs antennes, une première antenne servant à la réception du premier signal et une deuxième antenne servant à l'émission du deuxième signal. La station relais commute d'une antenne à une autre pour recevoir des signaux sur la première antenne et émettre des signaux sur la deuxième antenne et inversement, c'est-à-dire pour recevoir des signaux sur la deuxième antenne et émettre des signaux sur la première antenne.

Selon une variante, un quatrième signal est émis de manière synchronisée par la au moins une station de base BS1, BS2 et par la au moins une station relais RS. Ce quatrième signal correspond par exemple à un préambule de synchronisation. La première trame émise par la au moins une station de base comprend un signal représentatif d'une information de synchronisation à destination de la station relais. Cette information de synchronisation est émise dans les trames suivant la première trame de manière synchronisée par la au moins une station de base et par la au moins une station relais. Selon une variante, un signal représentatif d'une mise à jour de l'information de synchronisation est émis régulièrement par une station de base ou un élément externe à destination de la au moins une station relais.

Selon une variante, le premier signal est reçu par une pluralité de stations relais (par exemple 2, 3 ou 5 stations relais) formant un ensemble de station relais. L'ensemble de station relais ou une partie seulement des stations relais de cet ensemble émet alors les données ainsi reçues, la combinaison dans l'air des signaux émis formant le deuxième signal. L'utilisation de plusieurs stations relais à la place d'une station relais permet d'utiliser des stations relais de plus faible puissance, générant moins d'interférences, et permet de couvrir plus finement une zone donnée.

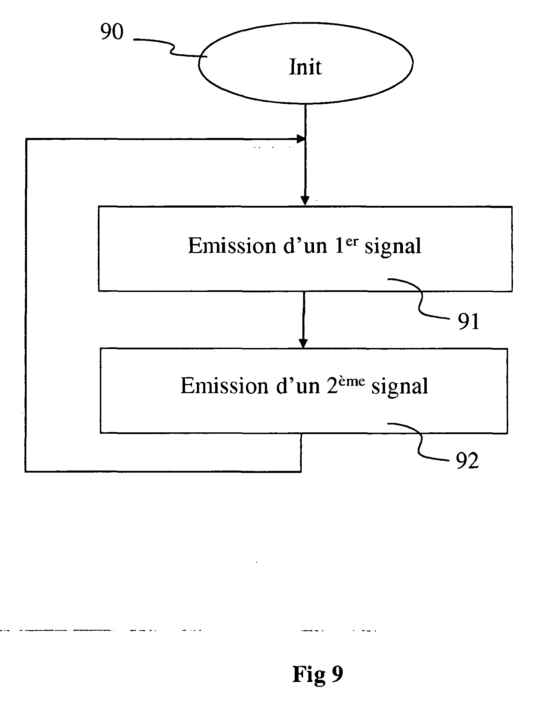

La figure 9 illustre un procédé d'émission mis en oeuvre dans au moins une station de base du système 1 ou 4, selon un exemple de mise en oeuvre non limitatif particulièrement avantageux de l'invention.

Au cours d'une étape d'initialisation 90, les différents paramètres de la au moins une station de base sont mis à jour. En particulier, les paramètres correspondant aux signaux à émettre ou à recevoir et aux sous-porteuses correspondantes sont initialisés d'une manière quelconque (par exemple suite à la réception de messages d'initialisation émis par une des stations de base, dite station maître ou par un serveur non représenté du système 1, ou encore par des commandes d'un opérateur).

Puis au cours d'une étape 91, un premier signal est émis via un premier canal sans fil sur un premier intervalle temporel d'une trame T. Ce premier signal est émis à destination d'une station relais RS et est représentatif de données destinées à au moins un terminal mobile MT1 à MT3.

Enfin, au cours d'une étape 92, un troisième signal représentatif des mêmes données que celles émises dans le premier signal est émis via un deuxième canal sans fil sur un deuxième intervalle temporel, différent du premier intervalle temporel. De manière avantageuse, le premier intervalle temporel appartient à une première trame T et le deuxième intervalle temporel appartient à une trame consécutive T+1. Selon une variante, les premier et deuxième intervalles temporels appartiennent à la même trame. Le troisième signal est émis de manière synchronisée avec un deuxième signal destiné à être émis par la au moins une station relais destinataire du premier signal. Le deuxième signal est comme le premier signal et le troisième signal représentatif des mêmes données destinées à au moins un terminal mobile MT1 à MT3.

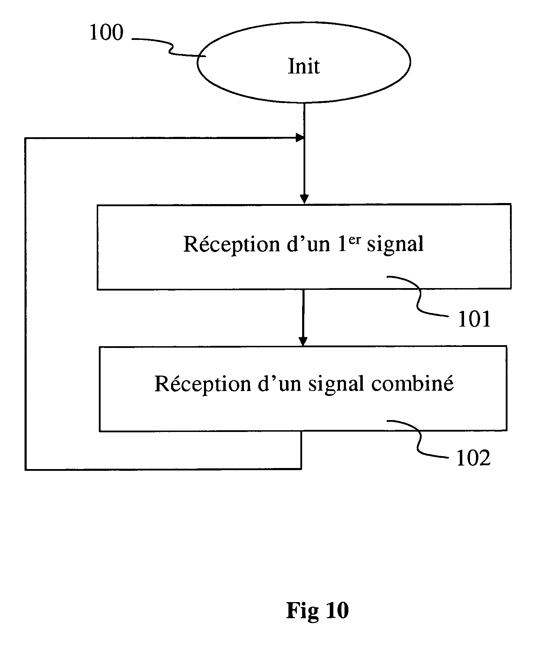

La **figure 10** illustre un procédé de réception mis en oeuvre dans au moins un terminal mobile du système 1 ou 4, selon un exemple de mise en oeuvre non limitatif particulièrement avantageux de l'invention.

Au cours d'une étape d'initialisation 100, les différents paramètres du terminal mobile sont mis à jour. En particulier, les paramètres correspondant aux signaux à émettre ou à recevoir et aux sous-porteuses correspondantes sont initialisés d'une manière quelconque (par exemple suite à la réception de messages d'initialisation émis par une des stations de base, dite station maître ou par un serveur non représenté du système 1, ou encore par des commandes d'un opérateur).

Puis au cours d'une étape 101, le au moins un terminal mobile MT1 à MT3 reçoit un premier signal représentatif de données qui lui sont destinées via un premier canal sans fil sur un premier intervalle temporel.

Enfin, au cours d'une étape 102, le au moins un terminal mobile reçoit un signal combiné sur un deuxième intervalle temporel différent du premier. Le signal combiné correspond à la combinaison dans l'air de plusieurs signaux, c'est-à-dire au moins un deuxième et au moins un troisième signal, représentatifs des mêmes données, émis à une même fréquence et de manière synchronisée par au moins une station de base et au moins une station relais.

De manière avantageuse, le au moins un terminal mobile sélectionne, au cours d'une étape de sélection non illustrée sur la figure 10, le signal qu'il décodera parmi les signaux reçus, c'est-à-dire parmi le premier signal et le signal combiné. De manière avantageuse, la sélection du signal à décoder est fonction d'au moins un critère de sélection appartenant au groupe comprenant :
- puissance de signal reçu par le au moins un terminal mobile : le signal reçu (ou la salve reçue) avec le meilleur niveau de puissance, le niveau de puissance étant estimé pour chaque signal reçu selon toute technique connue de l'homme du métier, est avantageusement sélectionné pour être décodé. Selon une autre variante, le signal reçu dont le niveau de puissance de réception est supérieur à une valeur seuil (par exemple -80dBm) est sélectionné pour être décodé. La prise en compte de ce critère offre notamment l'avantage de ne décoder que le meilleur des signaux reçus ;
- qualité de liaison entre au moins une station BS ou RS et le au moins une terminal mobile : la qualité de la liaison entre une station et le terminal mobile est par exemple estimée en déterminant le ratio signal sur bruit SNR (de l'anglais « Signal to Noise Ratio »). Avantageusement, la liaison présentant le SNR le plus élevé est sélectionnée pour que soit décodé le signal émis via cette liaison Selon une variante, la liaison dont le SNR est supérieur à une valeur seuil (par exemple 10dB ou 20dB) est sélectionnée pour que soit décodé le signal émis via cette liaison. La prise en compte de ce critère offre notamment l'avantage de ne décoder que le signal reçu de manière suffisamment audible pour pouvoir le traiter ; et
- un taux d'erreur de signal reçu (taux d'erreur binaire ou BER (« Bit Error Rate ») en anglais, taux d'erreur trame ou FER (« Frame Error Rate ») en anglais) : les signaux reçus sont décodées et le BER ou FER est estimé selon toute technique connue de l'homme du métier pour chacun des signaux décodés, les données issues du signal ayant le taux d'erreur le plus faible étant retenues. La prise en compte de ce critère présente l'avantage de comparer les données décodées issues de chacun des signaux et d'utiliser celui ayant le meilleur taux d'erreur pour par exemple lui appliquer toute méthode connue de l'homme du métier pour récupérer les erreurs à moindre coût.

Selon une variante avantageuse, le au moins un terminal mobile adapte le gain de réception, au cours d'une étape d'adaptation de gain non représentée sur la figure 10, en fonction d'un paramètre appartenant au groupe suivant :
- une position de signal reçu dans une trame de communication : à partir des informations contenues dans l'en-tête de trame, le terminal mobile sait quelle position est occupée par la salve émise par la station de base à destination de la station relais et contenant les données qui lui sont destinées, dite première salve, et quelle position est occupée par la salve émise par la station relais à son attention et correspondant à la réémission des données qui lui sont destinées reçues de la station de base, dite deuxième salve. Lors de la réception de la première salve, le au moins un terminal mobile détermine par exemple la puissance du signal et adapte son gain de réception pour la réception de la deuxième salve, la deuxième salve étant selon toute probabilité reçue avec une puissance plus importante que la première salve, la deuxième salve étant émise de manière synchronisée par la station de base et la station relais. L'adaptation du gain se fait avantageusement selon une formule déterminée de manière empirique ; et
- une information représentative de l'émetteur d'un signal contenue par exemple dans l'en-tête de trame : en fonction de quelle station émet le signal (station de base ou station relais), le au moins un terminal mobile paramètre son gain de réception.
L'adaptation du gain permet au terminal mobile d'optimiser la réception des signaux reçus et ainsi de minimiser les erreurs de réception.

Bien entendu, l'invention ne se limite pas aux modes de réalisation décrits précédemment.

En particulier, l'invention n'est pas limitée à un système comprenant une ou deux stations de base, une station relais et un ou trois terminaux mobiles mais s'étend également à un système comprenant plus de trois stations de base, plus de deux station relais, deux terminaux ou plus.

Selon une variante, l'assignation d'une ou plusieurs stations (de base ou relais) à un terminal mobile donné évolue dans le temps en fonction par exemple du déplacement du terminal mobile. Selon une variante, l'assignation des stations à un terminal mobile se fait en fonction des décalages de réception correspondant à chaque station estimés à partir d'un premier signal émis par un terminal mobile, par exemple lorsque le terminal mobile souhaite rentrer dans le réseau. Les stations dont le décalage de réception du premier signal est inférieur à une valeur seuil déterminée sont avantageusement assignées au terminal mobile.

## Revendications

1. Procédé d'émission pour un réseau sans fil, ledit réseau comprenant une pluralité de stations émettant à une même fréquence, **caractérisé en ce qu'**il comprend les étapes suivantes mises en oeuvre par au moins une station relais (10, 40) de ladite pluralité de stations :
- réception (81) via un premier canal sans fil d'un premier signal (512, 623) représentatif de données (503, 604), ledit premier signal étant émis de manière synchronisée par au moins deux stations de base (11, 12) de ladite pluralité de stations ; et
- émission (82) via un deuxième canal sans fil d'un deuxième signal (514, 629) représentatif desdites données (503, 604) reçues à destination d'un ensemble comprenant au moins un récepteur,
ledit deuxième signal étant émis de manière synchronisée avec un troisième signal (504, 609) représentatif desdites données (503, 604) et destiné à être émis par au moins une station de base (11, 12, 41) de ladite pluralité de stations.

2. Procédé selon la revendication 1, **caractérisé en ce que** ledit troisième signal et ledit premier signal sont émis par au moins deux même stations de base (11, 12).

3. Procédé selon l'une des revendications 1 ou 2, **caractérisé en ce qu'**il comprend une étape de réception d'au moins un signal représentatif d'une information de synchronisation.

4. Procédé selon la revendication 3, **caractérisé en ce que** le au moins un signal représentatif de l'information de synchronisation est émis par la au moins une des deux stations ayant émis ledit premier signal.

5. Procédé selon l'une des revendications 1 à 4, **caractérisé en ce que** le premier signal est émis sur un premier intervalle temporel, les deuxième et troisième signaux sont émis sur un deuxième intervalle temporel, lesdits premier et deuxième intervalles temporels appartenant à une même trame (50) de communication.

6. Procédé selon l'une des revendications 1 à 4, **caractérisé en ce que** le premier signal est émis sur un premier intervalle temporel, les deuxième et troisième signaux sont émis sur un deuxième intervalle temporel, lesdits premier et deuxième intervalles temporels appartenant à deux trames de communication (60, 61 ; 70, 71) consécutives.

7. Procédé selon l'une quelconque des revendications précédentes, **caractérisé en ce que** ladite au moins une station relais (10, 40) reçoit ledit premier signal via au moins une première antenne et émet ledit deuxième signal via au moins une deuxième antenne.

8. Procédé selon l'une des revendications précédentes, **caractérisé en ce que** un même quatrième signal est émis par la au moins une station de base et par la au moins une station relais de manière synchronisée.

9. Procédé d'émission pour un réseau sans fil, ledit réseau comprenant une pluralité de stations émettant à une même fréquence, **caractérisé en ce qu'**il comprend les étapes suivantes :
- émission (91), de manière synchronisée par au moins deux stations de base (11, 12) de ladite pluralité de stations, via un premier canal sans fil d'un premier signal représentatif de données sur un premier intervalle temporel ; et
- émission (92) via un deuxième canal sans fil d'un troisième signal représentatif desdites données sur un deuxième intervalle temporel,
ledit troisième signal étant émis de manière synchronisée par au moins une station de base (11, 12, 41) de ladite pluralité de stations avec un deuxième signal représentatif desdites données et destiné à être émis par au moins une station relais de ladite pluralité de stations destinataire du premier signal émis.

10. Procédé de réception pour un réseau sans fil, ledit réseau comprenant une pluralité de stations émettant à une même fréquence et au moins un terminal mobile, **caractérisé en ce qu'**il comprend les étapes suivantes mises en oeuvre par le au moins un terminal mobile :
- réception (101) via un premier canal sans fil d'un premier signal représentatif de données sur un premier intervalle temporel, ledit premier signal étant émis de manière synchronisée par au moins deux stations de base (11, 12) de ladite pluralité de stations ; et
- réception (102) d'un signal combiné sur un deuxième intervalle temporel, ledit signal combiné comprenant un deuxième signal représentatif desdites données et un troisième signal représentatif desdites données,
lesdits deuxième et troisième signaux étant émis de manière synchronisée par respectivement au moins une station de base (11, 12, 41) de ladite pluralité de stations et au moins une station relais de ladite pluralité de stations.

11. Procédé selon la revendication 10, **caractérisé en ce qu'**il comprend une étape de sélection desdits signaux reçus en fonction d'au moins un critère de sélection appartenant au groupe comprenant :
- une puissance de signal reçu ;
- une qualité de liaison entre au moins une station émettrice et le récepteur ;
- un taux d'erreur de signal reçu.

12. Procédé selon l'une des revendications 9 ou 10, **caractérisé en ce qu'**il comprend une étape d'adaptation du gain en fonction d'un paramètre appartenant au groupe comprenant :
- une position de signal reçu dans une trame de communication ;
- une information représentative de l'émetteur d'un signal.

13. Système (1) de communication sans fil comprenant une pluralité de stations de base et au moins une station relais (10, 40), la pluralité de stations de base et le au moins une station relais (10, 40) émettant à une même fréquence, **caractérisé en ce que** au moins deux stations de base de ladite pluralité comprennent chacune des moyens (27) pour l'émission synchronisée via un premier canal sans fil d'un premier signal (512, 623) représentatif de données (503, 604), la au moins une station relais (10, 40) étant configurée pour recevoir au moins un des premiers signaux (512, 623) émis par les au moins deux stations de base, la station relais comprenant des moyens (27) pour l'émission d'un deuxième signal (514, 629) représentatif desdites données (503, 604) de manière synchronisée avec un troisième signal (504, 609) représentatif desdites données (503, 604) émis par au moins une station de base (11, 12, 41) de ladite pluralité de stations de base.

## Claims

1. Method for transmitting in a wireless network, said network comprising a plurality of stations transmitting at a same frequency, **characterized in that** it comprises the following steps implemented by at least one relay station (10, 40) of said plurality of stations:
- receiving (81) via a first wireless channel of a first signal (512, 623) representative of data (503, 604), said first signal being transmitted in a synchronized way by at least two base stations (11,12) of said plurality of stations; and
- transmitting (82) via a second wireless channel a second signal (514, 629) representative of said data (503, 604) received destined for a set comprising at least one receiver,
said second signal being transmitted in a synchronized way with a third signal (504, 609) representative of said data (503, 604) and intended to be transmitted by at least one base station (11, 12, 41) of said plurality of stations.

2. Method according to claim 1, **characterized in that** said third signal and said first signal are transmitted by at least two same base stations (11, 12).

3. Method according to one of claims 1 or 2, **characterized in that** it comprises a step for receiving at least one signal representative of an item of synchronization information.

4. Method according to claim 3, **characterized in that** the at least one signal representative of the synchronization information is transmitted by at least one of the two stations having transmitted said first signal.

5. Method according to one of claims 1 to 4, **characterized in that** the first signal is transmitted on a first temporal interval, the second and third signals are transmitted on a second temporal interval, said first and second temporal intervals belonging to a same communication frame (50).

6. Method according to one of claims 1 to 4, **characterized in that** the first signal is transmitted on a first temporal interval, the second and third signals are transmitted on a second temporal interval, said first and second temporal intervals belonging to two consecutive communication frames (60, 61; 70, 71).

7. Method according to any one of the preceding claims, **characterized in that** said at least one relay station (10, 40) receives said first signal via at least one first antenna and transmits said second signal via at least one second antenna.

8. Method according to one of the preceding claims, **characterized in that** a same fourth signal is transmitted by the at least one base station and by the at least one relay station in a synchronized way.

9. Method for transmitting in a wireless network, said network comprising a plurality of stations transmitting at a same frequency, **characterized in that** it comprises the following steps:
- transmitting (91), in a synchronized way by at least two base stations (11, 12) of said plurality of stations, via a first wireless channel a first signal representative of data on a first temporal interval; and
- transmitting (92) via a second wireless channel a third signal representative of said data on a second temporal interval, said third signal being transmitted in a synchronized way by at least one base station (11, 12, 41) of said plurality of stations with a second signal representative of said data and intended to be transmitted by at least one relay station of said plurality of destination stations of the first signal transmitted.

10. Method for receiving in a wireless network, said network comprising a plurality of stations transmitting at a same frequency and at least one mobile terminal, **characterized in that** it comprises the following steps implemented by the at least one mobile terminal:
- receiving (101) via a first wireless channel a first signal representative of data on a first temporal interval, said first signal being transmitted in a synchronized way by at least two base stations (11,12) of said plurality of stations; and
- receiving (102) a combined signal on a second temporal interval, said combined signal comprising a second signal representative of said data and a third signal representative of said data,
said second and third signals being transmitted in a synchronized way by respectively at least on base station (11, 12, 41) of said plurality of stations and at least one relay station of said plurality of stations.

11. Method according to claim 10, **characterized in that** it comprises a step for selecting said received signals according to at least one selection criterion belonging to the group comprising:
- a received signal power;
- a link quality between at least one transmitting station and the receiver;
- a received signal error rate.

12. Method according to one of claims 9 or 10, **characterized in that** it comprises a step for adapting the gain according to a parameter belonging to the group comprising:
- a received signal position in a communication frame;
- an item of information representative of the transmitter of a signal.

13. Wireless communication system (1) comprising a plurality of base stations and at least one relay station (10, 40), the plurality of base stations and the at least one relay station (10, 40) transmitting at a same frequency, **characterized in that** at least two base stations of said plurality each comprise means (27) for synchronized transmission via a first wireless channel of a first signal (512, 623) representative of data (503, 604), the at least one relay station (10, 40) being configured to receive at least one of the first signals (513, 623) transmitted by the at least two base stations, the relay station comprising means (27) for transmitting a second signal (514, 629) representative of said data (503, 604) in a synchronized way with a third signal (504, 609) representative of said data (503, 604) transmitted by at least a base station (11, 12, 41) of said plurality of base stations.

## Patentansprüche

1. Sendungsverfahren für ein drahtloses Netzwerk, wobei das Netzwerk eine Vielzahl von Stationen umfasst, die mit einer gleichen Frequenz senden, **dadurch gekennzeichnet, dass** das Verfahren die folgenden Schritte umfasst, die von mindestens einer Relaisstation (10, 40) der Vielzahl von Stationen durchgeführt werden:
- Empfangen (81) eines ersten Signals (512, 623), das Daten (503, 604) darstellt, über einen ersten drahtlosen Kanal, wobei das erste Signal synchronisiert von mindestens zwei Basisstationen (11, 12) der Vielzahl von Stationen gesendet wird; und
- Senden (82) eines zweiten Signals (514, 629), das die empfangenen Daten (503, 604) darstellt, über einen zweiten drahtlosen Kanal an eine Einheit, die mindestens einen Empfänger umfasst,
wobei das zweite Signal synchronisiert mit einem dritten Signal (504, 609), das die Daten (503, 604) darstellt und dafür vorgesehen ist, von mindestens einer Basisstation (11, 12, 41) der Vielzahl von Stationen gesendet zu werden, gesendet wird.

2. Verfahren nach Anspruch 1, **dadurch gekennzeichnet, dass** das dritte Signal und das erste Signal von mindestens zwei gleichen Basisstationen (11, 12) gesendet werden.

3. Verfahren nach einem der Ansprüche 1 oder 2, **dadurch gekennzeichnet, dass** es einen Schritt des Empfangens mindestens eines Signals, das eine Synchronisierungsinformation darstellt, umfasst.

4. Verfahren nach Anspruch 3, **dadurch gekennzeichnet, dass** das mindestens eine Signal, das die Synchronisierungsinformation darstellt, von mindestens einer der zwei Stationen gesendet wird, die das erste Signal gesendet haben.

5. Verfahren nach einem der Ansprüche 1 bis 4, **dadurch gekennzeichnet, dass** das erste Signal in einem ersten Zeitschlitz gesendet wird, das zweite und das dritte Signal in einem zweiten Zeitschlitz gesendet werden, wobei der erste und der zweite Zeitschlitz zu einem gleichen Kommunikationsrahmen (50) gehören.

6. Verfahren nach einem der Ansprüche 1 bis 5, **dadurch gekennzeichnet, dass** das erste Signal in einem ersten Zeitschlitz gesendet wird, das zweite und das dritte Signal in einem zweiten Zeitschlitz gesendet werden, wobei der erste und der zweite Zeitschlitz zu zwei aufeinander folgenden Kommunikationsrahmen (60, 61; 70, 71) gehören.

7. Verfahren nach einem der vorhergehenden Ansprüche, **dadurch gekennzeichnet, dass** die mindestens eine Relaisstation (10, 40) das erste Signal über mindestens eine erste Antenne empfängt und das zweite Signal über mindestens eine zweite Antenne sendet.

8. Verfahren nach einem der vorhergehenden Ansprüche, **dadurch gekennzeichnet, dass** ein gleiches viertes Signal synchronisiert von der mindestens einen Basisstation und von der mindestens einen Relaisstation gesendet wird.

9. Sendungsverfahren für ein drahtloses Netzwerk, wobei das Netzwerk eine Vielzahl von Stationen umfasst, die mit einer gleichen Frequenz senden, **dadurch gekennzeichnet, dass** das Verfahren die folgenden Schritte umfasst:
- synchronisiertes Senden (91) eines ersten Signals, das Daten darstellt, von mindestens zwei Basisstationen (11, 12) der Vielzahl von Stationen über einen ersten drahtlosen Kanal in einem ersten Zeitschlitz und
- Senden (92) eines dritten Signals, das die Daten darstellt, über einen zweiten drahtlosen Kanal in einem zweiten Zeitschlitz,
wobei das dritte Signal synchronisiert von mindestens einer Basisstation (11, 12, 41) der Vielzahl von Stationen mit einem zweiten Signal, das die Daten darstellt und dafür vorgesehen ist, von mindestens einer Relaisstation der Vielzahl von Stationen gesendet zu werden, die der Empfänger des ersten gesendeten Signals ist, gesendet wird.

10. Empfangsverfahren für ein drahtloses Netzwerk, wobei das Netzwerk eine Vielzahl von Stationen, die mit einer gleichen Frequenz senden, und mindestens ein mobiles Endgerät umfasst, **dadurch gekennzeichnet, dass** das Verfahren die folgenden Schritte umfasst, die von dem mindestens einen mobilen Endgerät durchgeführt werden:
- Empfangen (101) eines ersten Signals, das Daten darstellt, über einen ersten drahtlosen Kanal in einem ersten Zeitschlitz, wobei das erste Signal synchronisiert von mindestens zwei Basisstationen (11, 12) der Vielzahl von Stationen gesendet wird; und
- Empfangen (102) eines kombinierten Signals in einem zweiten Zeitschlitz, wobei das kombinierte Signal ein zweites Signal, das die Daten darstellt, und ein drittes Signal, das die Daten darstellt, umfasst,
wobei das zweite und das dritte Signal synchronisiert von mindestens einer Basisstation (11, 12, 41) der Vielzahl von Stationen bzw. mindestens einer Relaisstation de Vielzahl von Stationen gesendet werden.

11. Verfahren nach Anspruch 10, **dadurch gekennzeichnet, dass** es einen Schritt des Auswählens der empfangenen Signale in Abhängigkeit von einem Auswahlkriterium umfasst, das zu der Gruppe gehört, die folgende umfasst:
- eine Leistung des empfangenen Signals;
- eine Verbindungsqualität zwischen mindestens einer sendenden Station und dem Empfänger und
- eine Fehlerrate des empfangenen Signals.

12. Verfahren nach einem der Ansprüche 9 oder 10, **dadurch gekennzeichnet, dass** es einen Schritt des Anpassens der Verstärkung in Abhängigkeit von einem Parameter umfasst, der zu der Gruppe gehört, die folgende umfasst:
- eine Position des empfangenen Signals in einem Kommunikationsrahmen;
- eine Information, die den Sender eines Signals darstellt.

13. Drahtloses Kommunikationssystem (1), das eine Vielzahl von Basisstationen und mindestens eine Relaisstation (10, 40) umfasst, wobei die Vielzahl von Basisstationen und die mindestens eine Relaisstation (10, 40) mit einer gleichen Frequenz senden, **dadurch gekennzeichnet, dass** mindestens zwei Basisstationen der Vielzahl jeweils Mittel (27) zum synchronisierten Senden eines ersten Signals (512, 623), das Daten (503, 604) darstellt, über einen ersten drahtlosen Kanal umfassen, wobei die mindestens eine Relaisstation (10, 40) dazu konfiguriert ist, mindestens eines der ersten Signale (512, 623), das von den mindestens zwei Basisstationen gesendet wurde, zu empfangen, wobei die Relaisstation Mittel (27) zum synchronisierten Senden eines zweiten Signals (514, 629), das die Daten (503, 604) darstellt, mit einem dritten Signal (504, 609), das die Daten (503, 604) darstellt und das von mindestens einer Basisstation (11, 12, 41) der Vielzahl von Basisstationen gesendet wurde, umfasst.
